# EUROPEAN PATENT APPLICATION

(11) **EP 4 848 364 A1**
(43) Date of publication of application: **02.12.2026**
(21) Application number: 24920700.2
(22) Date of filing: 05.11.2024
(51) Int. Cl.: H01M 4/38, H01M 4/525, H01M 4/46, H01M 4/583, H01M 4/36, H01M 10/0562, H01M 10/0565, H01M 4/02

(54) **ALL-SOLID-STATE SECONDARY BATTERY**

(30) Priority: 24.01.2024 KR 20240011006
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR); YUN, Jong Hyuk, Yongin-Si Gyeonggi-do 17084 (KR)
(74) Representative: Michalski Hüttermann & Partner mbB
(86) International application number: PCT/KR2024/017285
(87) International publication number: WO 2025/159285

(57) **Abstract**

An all-solid-state secondary battery includes: a cathode layer; an anode layer; and a solid electrolyte layer between the cathode layer and the anode layer. The cathode layer includes a cathode current collector and a cathode active material layer on one surface of the cathode current. The anode layer includes an anode current collector and a first anode active material layer on one surface of the anode current collector. The first anode active material layer includes a first anode active material, a second anode active material, and a carbon-based material, and the first anode active material includes an alloy phase.

## Description

### Technical Field

The present disclosure relates to an all-solid-state secondary battery.

### Background Art

Recently, in response to industrial demands, batteries with high energy density and safety are being actively developed. For example, lithium batteries are used in various applications such as information devices, communication devices, and automobiles. Since automobiles are related to life, safety is of importance.

Lithium batteries using liquid electrolytes may have an increased risk of fire and/or explosion in the event of a short circuit. All-solid-state secondary batteries employing solid electrolytes instead of liquid electrolytes have been proposed. Solid electrolytes have lower flammability than liquid electrolytes.

By employing a solid electrolyte instead of a liquid electrolyte, an all-solid-state secondary battery may have a reduced likelihood of fire or explosion. All-solid-state batteries may provide enhanced safety.

### Disclosure

### Technical Problem

An aspect of the present disclosure is to provide an all-solid-state secondary battery in which a volume change during charging and discharging is suppressed and charge-discharge characteristics are improved by including a first anode active material having an alloy phase in an anode active material layer.

### Technical Solution

According to an embodiment,
provided is an all-solid secondary battery including: a cathode layer; an anode layer; and a solid electrolyte layer disposed between the cathode layer and the anode layer,
wherein the cathode layer includes a cathode current collector and a cathode active material layer disposed on one surface of the cathode current collector;
wherein the anode layer includes an anode current collector and a first anode active material layer disposed on one surface of the anode current collector;
wherein the first anode active material layer includes a first anode active material, a second anode active material, and a carbon-based material; and
wherein the first anode active material includes an alloy phase.

### Advantageous Effects

According to an aspect, by including the first anode active material having an alloy phase in the anode active material layer, it is possible to provide an all-solid-state secondary battery in which a volume change during charging and discharging is suppressed and charge-discharge characteristics are improved.

### Description of Drawings

FIG. 1 is a cross-sectional view of an all-solid-state secondary battery according to an exemplary embodiment.
FIG. 2 is a cross-sectional view of an all-solid-state secondary battery according to an exemplary embodiment.
FIG. 3 is a cross-sectional view of an all-solid-state secondary battery according to an exemplary embodiment.
FIG. 4 is a cross-sectional view of an all-solid-state secondary battery according to an exemplary embodiment.
FIG. 5 is a cross-sectional view of an all-solid-state secondary battery according to an exemplary embodiment.
FIG. 6 is a cross-sectional view of an all-solid-state secondary battery according to an exemplary embodiment.
FIG. 7 is a cross-sectional view of an all-solid-state secondary battery according to an exemplary embodiment.
FIG. 8 is a cross-sectional view of an all-solid-state secondary battery according to an exemplary embodiment.
FIG. 9 is a cross-sectional view of an all-solid-state secondary battery according to an exemplary embodiment.
FIG. 10 is a cross-sectional view of an all-solid-state secondary battery according to an exemplary embodiment.
FIG. 11 is a cross-sectional view of an all-solid-state secondary battery according to an exemplary embodiment.
FIG. 12 is a cross-sectional view of an all-solid-state secondary battery according to an exemplary embodiment.

### Best Mode

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross-sectional illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

The present inventive concept may be embodied in many different forms and should not be construed as limited to the embodiments set forth herein. These embodiments are provided so that this disclosure will be thorough and complete, and will fully convey the scope of the present inventive concept to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

Although the terms "first," "second," "third," etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present disclosure.

The terminology used herein is for the purpose of describing particular embodiments only and is not intended to be limiting of the present inventive concept. As used herein, the singular forms are intended to include the plural forms as well, including "at least one," unless the context clearly indicates otherwise. "At least one" should not be construed as limiting to the singular. As used herein, the term "and/or" includes any and all combinations of one or more of the associated listed items. The terms "comprises" and/or "comprising," when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper," and "top" and the like, may be used herein for ease of description to describe one element or feature's relationship to another element or feature. Spatially relative terms will be understood as intended to include different orientations of the device during use or operation in addition to the directions depicted in the drawings. For example, if the device in the figures is turned over, elements described as "beneath" or "below" other elements or features would then be oriented "above" the other elements or features. Thus, the exemplary term "below" may encompass both an orientation of above and below. The device may be otherwise oriented (rotated 90 degrees or at other orientations) and the spatially relative descriptors used herein interpreted accordingly.

"Group" refers to a group of the Periodic Table of Elements according to the International Union of Pure and Applied Chemistry ("IUPAC") Group 1-18 group classification system.

As used herein, "particle diameter" refers to an average diameter when particles are spherical and refers to an average major axis length when particles are non-spherical. The particle diameter may be measured using a particle size analyzer (PSA). The "Particle diameter" is, for example, an average particle size. The "average particle diameter" is, for example, D50, which is a median particle diameter.

D50 is a particle size corresponding to a 50% cumulative volume calculated from the side of particles having a small particle size in a particle size distribution measured by a laser diffraction method.

D90 is a particle size corresponding to a 90% cumulative volume calculated from the side of particles having a small particle size in a particle size distribution measured by a laser diffraction method.

D10 is a particle size corresponding to a 10% cumulative volume calculated from the side of particles having a small particle size in a particle size distribution measured by a laser diffraction method.

As used herein, the "weight average molecular weight" of a polymer may be measured, for example, using gel permeation chromatography (GPC) and is a relative value with respect to polystyrene standard samples.

As used herein, "metal" includes both metals and metalloids, such as silicon and germanium, in an elemental or ionic state.

As used herein, "alloy" refers to a mixture of two or more metals.

As used herein, "electrode active material" refers to an electrode material capable of undergoing lithiation and delithiation.

As used herein, "cathode active material" refers to a cathode material capable of undergoing lithiation and delithiation.

As used herein, "anode active material" refers to an anode material capable of undergoing lithiation and delithiation.

As used herein, "lithiation" and "to lithiate" refer to a process of adding lithium to an electrode active material.

As used herein, "delithiation" and "to delithiate" refer to a process of removing lithium from an electrode active material.

As used herein, "charge" and "to charge" refer to a process of providing electrochemical energy to a battery.

As used herein, "discharge" and "discharge" refer to a process of removing electrochemical energy from a battery.

As used herein, "positive electrode" and "cathode" refer to an electrode where electrochemical reduction and lithiation occur during a discharge process.

As used herein, "negative electrode" and "anode" refer to an electrode where electrochemical oxidation and delithiation occur during a discharge process.

Although specific embodiments have been described, alternatives, modifications, variations, improvements, and substantial equivalents that are currently unforeseen or may be unforeseeable may occur to the applicant or those skilled in the art. Accordingly, the appended claims as filed and as they may be amended are intended to embrace all such alternatives, modifications, variations, improvements, and substantial equivalents.

Hereinafter, a lithium-ion conductor and a solid-state battery including the same according to exemplary embodiments will be described in more detail.

### [All-solid-state secondary battery]

An all-solid-state secondary battery according to an embodiment includes: a cathode layer; an anode layer; and a solid electrolyte layer disposed between the cathode layer and the anode layer, wherein the cathode layer includes a cathode current collector and a cathode active material layer disposed on one surface of the cathode current collector, wherein the anode layer includes an anode current collector and a first anode active material layer disposed on one surface of the anode current collector, wherein the first anode active material layer includes a first anode active material, a second anode active material, and a carbon-based material, and wherein the first anode active material includes an alloy phase.

By including the first anode active material having an alloy phase in the first anode active material layer, the initial charge-discharge efficiency of the all-solid-state secondary battery may be improved during charging and discharging of the all-solid-state secondary battery. As the all-solid-state secondary battery has improved initial charge-discharge efficiency, the irreversible capacity of the all-solid-state secondary battery may be reduced. Consequently, the specific capacity of the all-solid-state secondary battery is increased, and the energy density of the all-solid-state secondary battery may be enhanced.

Since the first anode active material layer includes the first anode active material having an alloy phase, a volume change of the first anode active material layer may be mitigated during charging and discharging of the all-solid-state secondary battery. Consequently, by mitigating the volume change of the anode layer during charging and discharging, the high-rate characteristics and/or cycle life characteristics of the all-solid-state secondary battery may be improved. In addition, as the volume change of the anode layer is mitigated, the thickness of a buffer member for accommodating the volume change of the anode layer may be reduced, or the buffer member may be omitted. As a result, the energy density of the all-solid-state secondary battery may be further enhanced.

By including the second anode active material in the first anode active material layer, the uniformity of lithium precipitation and/or the lithium precipitation rate may be improved during the charging process of the all-solid-state secondary battery. Consequently, the cycle life characteristics and/or high-rate characteristics of the all-solid-state secondary battery may be improved.

The first anode active material layer includes a carbon-based material, and the carbon-based material provides a conductive path between the first anode active material and/or the second anode active material. Accordingly, the carbon-based material may more effectively suppress an increase in the internal resistance of the first anode active material layer during charging and discharging of the all-solid-state secondary battery. Consequently, an increase in the internal resistance of the all-solid-state secondary battery may be suppressed.

The first anode active material layer includes a carbon-based material, and the carbon-based material acts as a support and/or a buffer between the first anode active material and/or the second anode active material. Accordingly, the carbon-based material may more effectively mitigate the volume change of the first anode active material layer during charging and discharging of the all-solid-state secondary battery. Consequently, the volume change during charging and discharging of the all-solid-state secondary battery may be reduced.

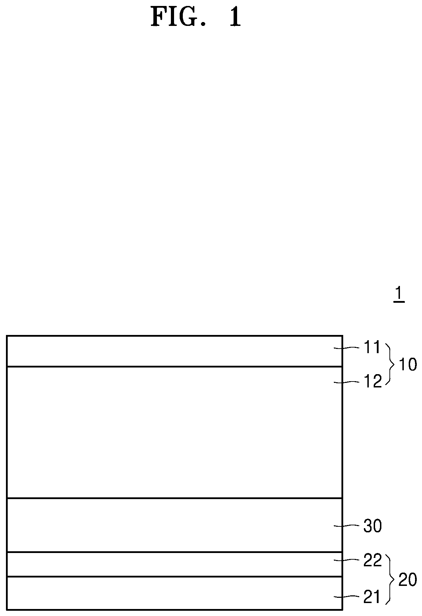

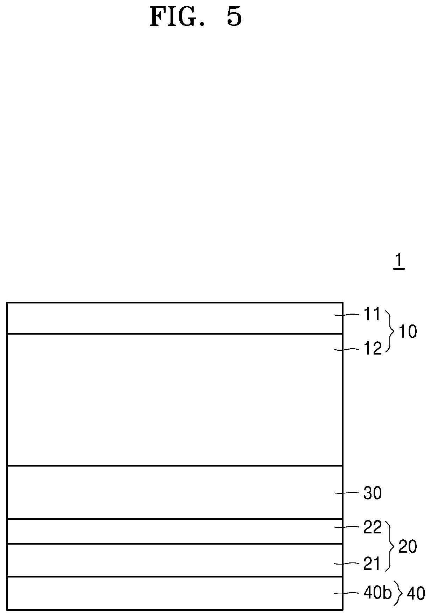

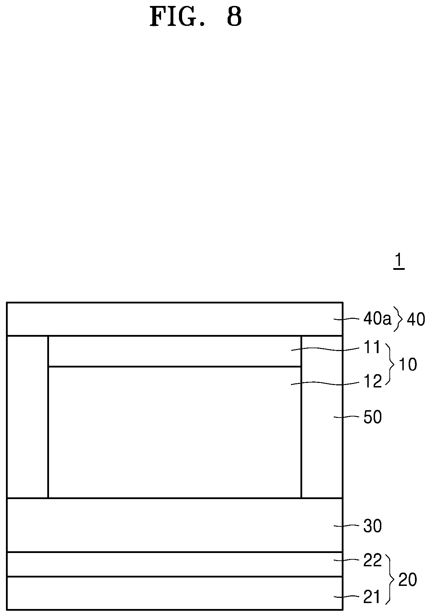

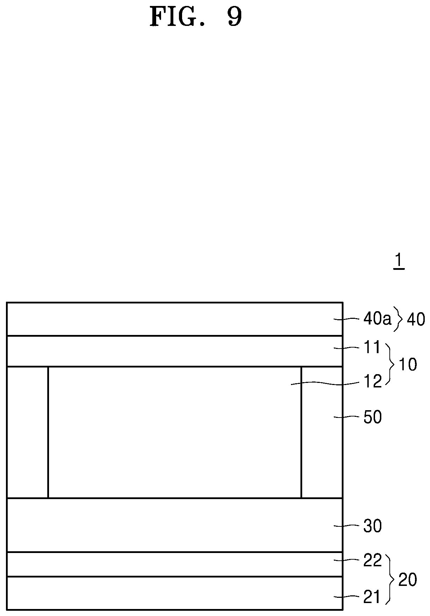

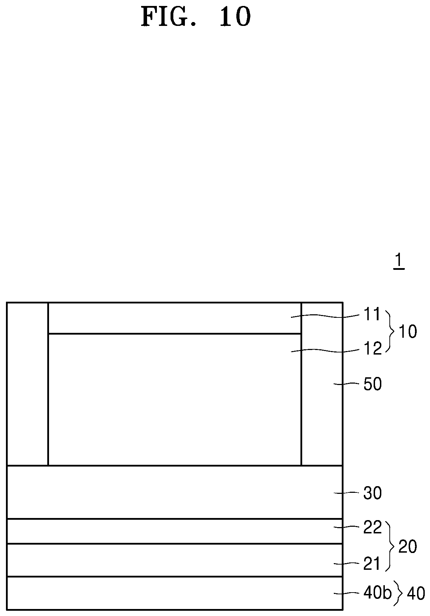

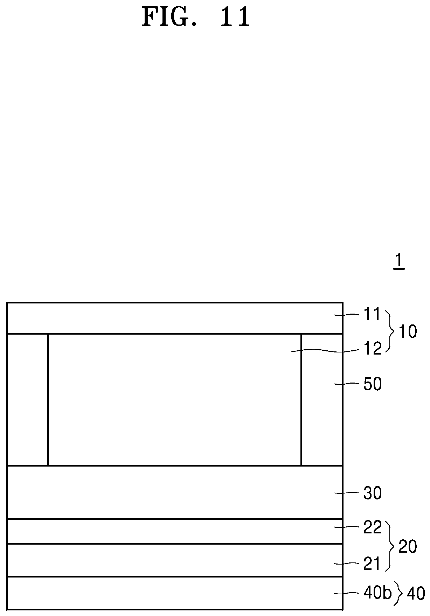

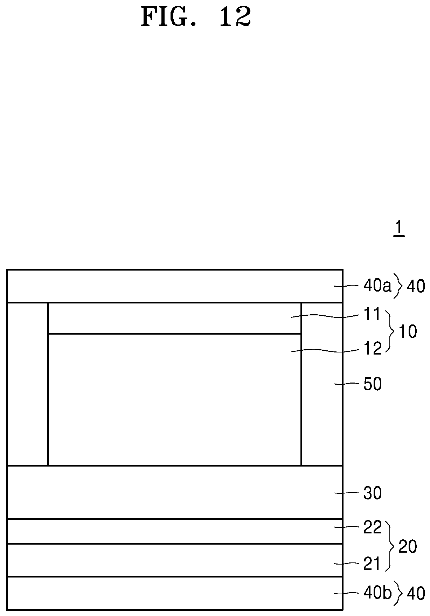

Referring to FIGS. 1 to 12, an all-solid-state secondary battery (1) includes: a cathode layer (10); an anode layer (20); and a solid electrolyte layer (30) between the cathode layer (10) and the anode layer (20). The cathode layer (10) includes a cathode current collector (11) and a cathode active material layer (12) disposed on one surface of the cathode current collector (11). The anode layer (20) includes an anode current collector (21) and a first anode active material layer (22) disposed on one surface of the anode current collector (21). The first anode active material layer (22) includes a first anode active material, a second anode active material, and a fibrous carbon-based material. The first cathode active material includes an alloy phase.

### [Anode Layer]

### [First Anode Active Material Layer: First Anode Active Material]

Referring to FIGS. 1 to 12, the anode layer (20) includes the first anode active material layer (22). The first anode active material layer (22) includes a first anode active material.

The first anode active material includes an alloy phase. The first anode active material is, for example, an alloy-based anode active material. Since the first anode active material includes an alloy phase, the first anode active material may provide increased initial charge-discharge efficiency and/or increased discharge capacity. The first anode active material may include, for example, an alloy phase composed of a metal other than lithium.

The first anode active material may include, for example, silicon (Si), iron (Fe), and a first metal. The first anode active material may include, for example, an alloy phase including two or more metals selected from silicon (Si), iron (Fe), and the first metal. Since the first anode active material includes silicon, the capacity of the first anode active material may be improved. One silicon atom is capable of bonding with 4.4 lithium atoms. Since the first anode active material includes iron and/or the first metal, a rapid volume change of the first anode active material may be mitigated, thereby improving the cycle life characteristics of the all-solid-state secondary battery (1) including the same. The first metal may include, for example, copper (Cu), aluminum (Al), titanium (Ti), chromium (Cr), manganese (Mn), cobalt (Co), nickel (Ni), zirconium (Zr), niobium (Nb), molybdenum (Mo), tin (Sn), cerium (Ce), or a combination thereof.

The first anode active material may include, for example, 60 at% to 90 at%, 65 at% to 90 at%, or 70 at% to 90 at% of silicon (Si) based on 100 at% of the total weight of the first anode active material. By including silicon (Si) within these ranges in the first anode material, the first cathode active material may provide a high discharge capacity. The first anode active material may include, for example, more than 0 at% to 30 at%, 1 at% to 25 at%, 1 at% to 20 at%, 1 at% to 15 at%, or 1 at% to 10 at% of iron (Fe) based on 100 at% of the total weight of the first anode active material. By including iron (Fe) within these ranges in the first anode active material, excessive volume change of the first anode active material may be effectively suppressed. The first anode active material may include, for example, more than 0 at% to 30 at%, 1 at% to 25 at%, 1 at% to 20 at%, 1 at% to 15 at%, or 1 at% to 10 at% of the first metal based on 100 at% of the total weight of the first anode active material. By including the first metal within these ranges in the first anode active material, excessive volume change of the first anode active material may be effectively suppressed. The first anode active material may include, for example, more than 0 at% to 20 at%, 1 at% to 15 at%, or 1 at% to 10 at% of copper (Cu) based on 100 at% of the total weight of the first anode active material. By including copper within these ranges in the first cathode active material, excessive volume change of the first cathode active material may be effectively suppressed. The first anode active material may include, for example, 0 at% to 10 at%, 0 at% to 7 at%, or 0 at% to 5 at% of aluminum (Al) based on 100 at% of the total weight of the first anode active material. By including aluminum within these ranges in the first cathode active material, excessive volume change of the first cathode active material may be effectively suppressed. The first anode active material may include, for example, 60 at% to 90 at% of silicon (Si), more than 0 at% to 30 at% of iron (Fe), and more than 0 at% to 10 at% of the first metal. By having such a composition in the first anode active material, the cycle characteristics of the all-solid-state secondary battery (1) including the first anode active material may be further improved. For example, the first anode active material may include 60 at% to 90 at% of silicon (Si), more than 0 at% to 30 at% of iron (Fe), and more than 0 at% to 10 at% of copper (Cu). By having such a composition in the first anode active material, the cycle characteristics of the all-solid-state secondary battery (1) including the first anode active material may be further improved. The first anode active material may include, for example, 60 at% to 90 at% of silicon (Si), more than 0 at% to 30 at% of iron (Fe), more than 0 at% to 10 at% of copper (Cu), and 0 at% to 10 at% of aluminum (Al). By having such a composition in the first anode active material, the cycle characteristics of the all-solid-state secondary battery (1) including the first anode active material may be further improved.

The first anode active material may, for example, form an alloy with lithium or form a compound with lithium. The first anode active material may include, for example, a silicon single phase, an alloy phase of silicon and iron, an alloy phase of silicon and a first metal, an alloy phase of iron and a first metal, an alloy phase of a plurality of first metals, or a combination thereof. The first anode active material may further include, for example, an iron single phase, a first metal single phase, or a combination thereof**.** In the silicon single phase, for example, volume change may become significant by forming an alloy with lithium or forming a compound with lithium. Including the alloy phase of silicon and iron, the alloy phase of silicon and a first metal, the alloy phase of iron and a first metal, the alloy phase of a plurality of first metals, or a combination thereof, some or all of these alloy phases may, for example, form an alloy with lithium or form a compound with lithium. Alternatively, one or more of the alloy phase of silicon and iron, the alloy phase of silicon and a first metal, the alloy phase of iron and a first metal, the iron single phase, the first metal single phase, and the alloy phase of a plurality of first metals may suppress the volume change of the first anode active material, for example, by suppressing the volume change of the silicon single phase without bonding with lithium. One or more of the alloy phase of silicon and iron, the alloy phase of silicon and a first metal, the alloy phase of iron and a first metal, the iron single phase, the first metal single phase, and the alloy phase of a plurality of first metals may, for example, surround some or all of the silicon single phase. For example, a silicon single phase may be uniformly and/or non-uniformly distributed within one or more alloy phases among an alloy phase of silicon and iron, an alloy phase of silicon and a first metal, an alloy phase of iron and a first metal, and an alloy phase of a plurality of first metals. By having such a structure in the first anode active material, the volume change of the first anode active material during charging and discharging may be more effectively suppressed. The alloy phase of silicon and iron may be represented, for example, by FeₐSi_{b} (where a and b are each independently a natural number of 1 to 100). The alloy phase of silicon and the first metal may be represented, for example, by M1_{c}Si_{d} (where c and d are each independently a natural number of 1 to 100). The alloy phase of iron and the first metal may be represented, for example, by FeₑM1_{f} (where e and f are each independently a natural number of 1 to 100). The alloy phase of a plurality of first metals may be represented, for example, by M1'_{g}M1"ₕ (where g and h are each independently a natural number of 1 to 100, and M1' and M1'' are each a metal selected from M1). The alloy phase of silicon and iron may include, for example, FeSi₂, Fe₂Si₅, FeSi, or a combination thereof. The alloy phase of the first metal may be, for example, an alloy phase of copper and aluminum.

The first anode active material may further include, for example, boron (B), carbon (C), phosphorus (P), or a combination thereof. Since the first anode active material further includes boron (B), carbon (C), phosphorus (P), or a combination thereof, the volume change of the first anode active material may be more effectively mitigated. Alternatively, the first anode active material may, for example, not include boron (B), carbon (C), phosphorus (P), or a combination thereof. Since the first anode active material does not include boron (B), carbon (C), phosphorus (P), or a combination thereof, the first anode active material may be prepared more simply and easily.

The first anode active material may be, for example, a lithiated anode active material. The lithiated anode active material is, for example, an alloy-based anode active material having the above-mentioned alloy phase, which is additionally substituted with lithium. Methods for substituting lithium may include sputtering, electrochemical charging, milling, and the like, but are not limited thereto, and any method available in the art for substituting lithium in an alloy-based anode active material may be used. The first anode active material may include, for example, lithium (Li), silicon (Si), iron (Fe), and a first metal. The first anode active material may include, for example, a lithium-silicon alloy phase. The first anode active material may include, for example, lithium (Li), silicon (Si), iron (Fe), and a first metal, and may include a lithium-silicon alloy phase. Since the first anode active material is a lithiated anode active material, the initial charge-discharge efficiency of the all-solid-state secondary battery (1) including the first anode active material may be further improved. Consequently, as the irreversible capacity of the all-solid-state secondary battery (1) decreases, the specific capacity of the all-solid-state secondary battery (1) may increase, and the energy density may increase.

The first anode active material layer (22) includes a first anode active material, and the first anode active material has, for example, a particle shape. A size of the first anode active material having a particle shape is, for example, 20 µm or less, 15 µm or less, 10 µm or less, or 7 µm or less. The size of the first anode active material having a particle form is, for example, 0.1 µm to 20 µm, 0.5 µm to 20 µm, 1 µm to 20 µm, 1 µm to 15 µm, 1 µm to 10 µm, or 3 µm to 7 µm. Since the anode active material has a size within these ranges, the first anode active material may more easily perform reversible absorption and/or desorption of lithium during charging and discharging. The size of the first anode active material is, for example, an average particle diameter of the first anode active material. The average particle diameter of the first anode active material is, for example, a median diameter (D50) measured using a laser-type particle size distribution analyzer. The size of the first anode active material may be measured, for example, using a laser-type particle size distribution analyzer, a scanning electron microscope, or the like.

An aspect ratio of the first anode active material is, for example, 5 or less, 4 or less, 3 or less, or 2 or less. The aspect ratio of the first anode active material is, for example, 1 to 5, 1 to 4, 1 to 3, or 1 to 2. Since the first anode active material has an aspect ratio within these ranges, it may be more uniformly distributed within the first anode active material layer (22). Consequently, non-uniformity of volume change during charging and discharging of the first anode active material may be suppressed. The aspect ratio of the first anode active material may be measured, for example, using a scanning electron microscope.

### [First Anode Active Material Layer: Second Anode Active Material]

Referring to FIGS. 1 to 12, the anode layer (20) includes the first anode active material layer (22). The first anode active material layer (22) includes a second anode active material.

The second anode active material is, for example, an anode material capable of forming an alloy with lithium or an anode material capable of forming a compound with lithium. The second anode active material is distinguished from the first anode active material. A size of the second anode active material is, for example, smaller than the size of the first anode active material. The size of the second anode active material is, for example, 60 % or less, 40 % or less, 20 % or less, or 10 % or less of the size of the first anode active material.

The first anode active material layer (22) includes a second anode active material, and the second anode active material has, for example, a particle shape. A size of the second anode active material having a particle shape is, for example, less than 1 µm, 500 nm or less, 300 nm or less, or 100 nm or less. The size of the second anode active material having a particle shape is, for example, 10 nm to less than 1 µm, 10 nm to 900 nm, 10 nm to 700 nm, 10 nm to 500 nm, 10 nm to 300 nm, 10 nm to 200 nm, or 10 nm to 100 nm. Since the second anode active material has a size within these ranges, the second anode active material may more easily perform reversible absorbing and/or desorbing of lithium during charging and discharging. The size of the second anode active material is, for example, an average particle diameter of the second anode active material. The average particle diameter of the second anode active material is, for example, a median diameter (D50) measured using a laser-type particle size distribution analyzer.

An aspect ratio of the second anode active material is, for example, 5 or less, 4 or less, 3 or less, or 2 or less. The aspect ratio of the second anode active material is, for example, 1 to 5, 1 to 4, 1 to 3, or 1 to 2. Since the second anode active material has an aspect ratio within these ranges, it may be more uniformly distributed within the first anode active material layer (22). Consequently, non-uniformity of volume change during charging and discharging of the second anode active material may be suppressed. The aspect ratio of the second anode active material may be measured, for example, using a scanning electron microscope.

The second anode active material included in the first anode active material layer (22) includes, for example, a carbon-based anode active material, a second metal-based anode active material distinguished from the first anode active material, or a combination thereof.

The carbon-based anode active material includes, for example, amorphous carbon, crystalline carbon, porous carbon, or a combination thereof.

In particular, the carbon-based anode active material is amorphous carbon. Amorphous carbon is, for example, carbon black (CB), acetylene black (AB), furnace black (FB), ketjen black (KB), graphene, or the like, but is not necessarily limited thereto, and any material classified as amorphous carbon in the art may be used. Amorphous carbon is carbon that has no crystallinity or has very low crystallinity, and is distinguished from crystalline carbon or graphitic carbon.

The carbon-based anode active material may, for example, be porous carbon. A pore volume included in the porous carbon is, for example, 0.1 cc/g to 10.0 cc/g, 0.5 cc/g to 5 cc/g, or 0.1 cc/g to 1 cc/g. An average pore diameter included in the porous carbon is, for example, 1 nm to 50 nm, 1 nm to 30 nm, or 1 nm to 10 nm. A BET specific surface area of the porous carbon is, for example, 100 m2/g to 3000 m2/g.

The second metal-based anode active material includes one or more selected from the group consisting of gold (Au), platinum (Pt), palladium (Pd), silver (Ag), aluminum (Al), bismuth (Bi), tin (Sn), and zinc (Zn), but is not necessarily limited thereto, and any material available in the art as a metal anode active material or a metalloid anode active material that forms an alloy or compound with lithium may be used. For example, nickel (Ni) is not a second metal-based anode active material because it does not form an alloy with lithium.

The first anode active material layer (22) includes one kind of the second anode active material among these second anode active materials, or includes a mixture of a plurality of different second anode active materials. For example, the first anode active material layer (22) includes only amorphous carbon, or includes one or more selected from the group consisting of gold (Au), platinum (Pt), palladium (Pd), silver (Ag), aluminum (Al), bismuth (Bi), tin (Sn), and zinc (Zn). Alternatively, the first anode active material layer (22) includes a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). A mixing ratio (weight ratio) of the mixture of amorphous carbon and gold or the like is, for example, 99:1 to 1:99, 10:1 to 1:2, 5:1 to 1:1, or 4:1 to 2:1, but is not necessarily limited to these ranges and is selected according to the required characteristics of the all-solid-state secondary battery (1). Since the second anode active material has such a composition, the cycle characteristics of the all-solid-state secondary battery (1) may be further improved.

The first anode active material layer (22) includes the second anode active material, and the second anode active material may include, for example, a mixture of first particles made of amorphous carbon and second particles made of the second metal-based anode active material. The second metal-based anode active material includes, for example, gold (Au), platinum (Pt), palladium (Pd), silver (Ag), aluminum (Al), bismuth (Bi), tin (Sn), zinc (Zn), and the like. The content of the second particles is, based on the total weight of the mixture, 1 wt% to 99 wt%, 1 wt% to 60 wt%, 8 wt% to 60 wt%, 10 wt% to 50 wt%, 15 wt% to 40 wt%, or 20 wt% to 30 wt%. Since the second particles have a content within these ranges, the cycle characteristics of the all-solid-state secondary battery (1) may, for example, be further improved.

Alternatively, the first anode active material layer (22) includes a second anode active material, and the second anode active material may include, for example, a composite anode active material. The composite anode active material may include, for example, a carbon-based support and a third metal-based anode active material supported on the carbon-based support. Since the composite anode active material has such a structure, localization of the third metal-based anode active material within the first anode active material layer (22) may be prevented, and a uniform distribution may be obtained. Consequently, the cycle characteristics of the all-solid-state secondary battery (1) including the first anode active material layer (22) are further improved.

The third metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silver (Ag), aluminum (Al), bismuth (Bi), tin (Sn), tellurium (Te), zinc (Zn), and the like. The metal oxide includes, for example, gold (Au) oxide, platinum (Pt) oxide, palladium (Pd) oxide, silver (Ag) oxide, aluminum (Al) oxide, bismuth (Bi) oxide, tin (Sn) oxide, tellurium (Te) oxide, zinc (Zn) oxide, and the like. The metal oxide may include, for example, AuₓO_{y} (0<x≤2, 0<y≤3), PtₓO_{y} (0<x≤1, 0<y≤2), PdₓO_{y} (0<x≤1, 0<y≤1), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1) or a combination thereof. The composite of a metal and a metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a compositre of Te and TeₓO_{y} (0<x≤1, 0<y≤3), a composite of Zn and ZnₓO_{y} (0<x≤1, 0<y≤1), or a combination thereof.

The carbon-based support is, for example, amorphous carbon. Amorphous carbon is, for example, carbon black (CB), acetylene black (AB), furnace black (FB), ketjen black (KB), graphene, activated carbon, or the like, but is not necessarily limited thereto, and any material classified as amorphous carbon in the art may be used. Amorphous carbon is carbon that has no crystallinity or has very low crystallinity, and is distinguished from crystalline carbon or graphitic carbon.

The composite anode active material has, for example, a particle shape. A particle size of the composite anode active material having a particle shape is, for example, 10 nm to 2 µm, 10 nm to 1 µm, 10 nm to 500 nm, 10 nm to 200 nm, or 10 nm to 100 nm. Since the composite anode active material has a particle size within these ranges, reversible absorbing and/or desorbing of lithium may be more easily performed during charging and discharging. The third metal-based anode active material supported on the carbon-based support may, for example, have a particle shape. A particle size of the third metal-based anode active material may be, for example, 1 nm to 200 nm, 1 nm to 150 nm, 5 nm to 100 nm, or 10 nm to 50 nm. The carbon-based support may, for example, have a particle shape. A particle size of the carbon-based support may be, for example, 10 nm to 2 µm, 10 nm to 1 µm, 10 nm to 500 nm, 10 nm to 200 nm, or 10 nm to 100 nm. Since the carbon-based support has a particle size within these ranges, it may be more uniformly disposed within the first anode active material layer. The carbon-based support may be, for example, nanoparticles having a particle size of 500 nm or less. The particle size of the composite anode active material, the particle size of the third metal-based anode active material, and the particle size of the carbon-based support are, for example, average particle sizes. The average particle size is, for example, a median diameter (D50) measured using a laser-type particle size distribution analyzer. Alternatively, the average particle size may be determined, for example, automatically using software from an electron microscope image or manually by a user.

The first anode active material layer (22) includes a first anode active material and a second anode active material, and a mixing ratio of the first anode active material and the second anode active material may be, in a weight ratio, 9:1 to 1:9, 8:2 to 2:8, 7:3 to 3:7, or 6:4 to 4:6. Since the first anode active material and the second anode active material have a weight ratio within these ranges, the cycle characteristics of the all-solid-state secondary battery (1) may be further improved.

### [First Anode Active Material Layer: Fibrous Carbon-Based Material]

The first anode active material layer (22) includes a carbon-based material in addition to the first anode active material and the second anode active material. The carbon-based material may include, for example, a fibrous carbon-based material.

The first anode active material layer (22) may, for example, include a mixture of a first anode active material including an alloy phase and a fibrous carbon-based material. The first anode active material layer (22) may, for example, include a mixture of the fibrous carbon-based material and one or more first anode active materials selected from the group consisting of silicon (Si), gold (Au), platinum (Pt), palladium (Pd), silver (Ag), aluminum (Al), bismuth (Bi), tin (Sn), and zinc (Zn). A mixing ratio (weight ratio) of the mixture of the fibrous carbon-based material and silicon or the like is, for example, 99:1 to 1:99, 10:1 to 1:10, 1:1 to 1:9, 1:1 to 1:8, 1:1 to 1:7, 1:1 to 1:6, 1:1 to 1:5, 1:1 to 1:4, or 1:1 to 1:3, but is not necessarily limited to these ranges and may be selected according to the required characteristics of the all-solid-state secondary battery (1). Since the fibrous carbon-based material and the anode active material have such a composition, the cycle characteristics of the all-solid-state secondary battery (1) may be further improved.

The first cathode active material layer (22) may include, for example, a mixture of first particles made of the first cathode active material and second particles made of a fibrous carbon-based material. The first particles may, for example, be particles including silicon (Si), iron (Fe), and a first metal, and including an alloy phase of two or more elements selected therefrom. The first metal may include, for example, copper (Cu), titanium (Ti), chromium (Cr), manganese (Mn), cobalt (Co), nickel (Ni), zirconium (Zr), niobium (Nb), molybdenum (Mo), tin (Sn), cerium (Ce), or a combination thereof. The content of the second particles is, for example, 1 wt% to 30 wt%, 1 wt% to 25 wt%, 1 wt% to 20 wt%, 1 wt% to 15 wt%, or 1 wt% to 10 wt% based on the total weight of the mixture. Since the fibrous carbon-based material has a content within these ranges, for example, the cycle characteristics of the all-solid-state secondary battery (1) may be further improved.

A size of the second anode active material may, for example, be smaller than a length of the fibrous carbon-based material. Since the length of the fibrous carbon-based material is greater than the size of the second anode active material, the fibrous carbon-based material may act as a support and/or a buffer between a plurality of the second anode active materials. The fibrous carbon-based material is disposed between the plurality of the second anode active materials and may effectively mitigate stress due to a volume change of the second anode active material caused by precipitation and/or dissolution of lithium during charging and discharging. Consequently, the volume change of the first anode active material layer (22) during charging and discharging may be more effectively suppressed. A ratio of the size of the second anode active material to the length of the fibrous carbon-based material may be, for example, 1:10 to 1:2000, 1:10 to 1:1000, 1:10 to 1:500, 1:10 to 1:200, 1:10 to 1:100, 1:10 to 1:50, or 1:10 to 1:20. Since the ratio of the size of the second anode active material to the length of the fibrous carbon-based material is within these ranges, for example, the cycle characteristics of the all-solid-state secondary battery (1) are further improved.

The fibrous carbon-based material may, for example, be a conductive carbon-based material. Since the fibrous carbon-based material has conductivity, it may provide a conductive path inside the first anode active material layer (22). The fibrous carbon-based material may more effectively reduce the internal resistance of the first anode active material layer (22). Consequently, the cycle characteristics of the all-solid-state secondary battery (1) are improved. The first anode active material layer (22) may not additionally include other carbon-based conductive materials besides the fibrous carbon-based material. Since the first anode active material layer (22) does not include other carbon-based conductive materials besides the fibrous carbon-based material, the energy density of the first anode active material layer (22) may be further improved.

An aspect ratio of the fibrous carbon-based material may be, for example, 10 or more, 20 or more, 30 or more, or 50 or more. The aspect ratio of the fibrous carbon-based material may be, for example, 2000 or less, 1000 or less, 500 or less, 200 or less, or 100 or less. The aspect ratio of the fibrous carbon-based material may be, for example, 10 to 2000, 20 to 2000, 30 to 2000, or 50 to 2000. The aspect ratio of the fibrous carbon-based material may be, for example, 10 to 2000, 10 to 1000, 10 to 500, 10 to 200, 10 to 100, 10 to 50, or 10 to 20. The aspect ratio of the fibrous carbon-based material is, for example, a ratio of a length of a major axis of the fibrous carbon-based material, i.e., a length of the fibrous carbon-based material, to a length of a minor axis perpendicular to the major axis, i.e., a diameter of the fibrous carbon-based material. Since the fibrous carbon-based material has an aspect ratio within these ranges, a conducting path inside the first anode active material layer (22) may become longer. The fibrous carbon-based material may form a three-dimensional conductive network within the first anode active material layer (22), thereby more effectively reducing the internal resistance of the first anode active material layer (22). Consequently, the internal resistance of the all-solid-state secondary battery (1) is reduced. For example, high-rate characteristics of the all-solid-state secondary battery (1) may be improved. The aspect ratio of the fibrous carbon-based material may be measured, for example, from a scanning electron microscope (SEM) or transmission electron microscope (TEM) image.

The fibrous carbon-based material may include, for example, an amorphous fibrous carbon-based material, a crystalline fibrous carbon-based material, or a combination thereof. Since the fibrous carbon-based material includes the amorphous fibrous carbon-based material, a side reaction between lithium and the fibrous carbon-based material may be more effectively suppressed. As the reversibility of an electrode reaction during charging and discharging of the all-solid-state secondary battery (1) is improved, the cycle characteristics of the all-solid-state secondary battery (1) may be improved.

A diameter of the fibrous carbon-based material may be, for example, 50 nm or less, 30 nm or less, 20 nm or less, or 10 nm or less. The diameter of the fibrous carbon-based material may be, for example, 1 nm to 50 nm, 1 nm to 30 nm, or 1 nm to 10 nm. Since the fibrous carbon-based material has a diameter within these ranges, the internal resistance of the first anode active material layer (22) may be effectively reduced, and the material may be easily dispersed within a solvent and/or a slurry during the preparation of the first anode active material layer (22).

A length of the fibrous carbon-based material may be, for example, 1000 µm or less, 100 µm or less, 50 µm or less, 10 µm or less, 5 µm or less, 2 µm or less, 1 µm or less, 500 nm or less, or 300 nm or less. The length of the fibrous carbon-based material may be, for example, 100 nm to 1000 µm, 100 nm to 500 µm, 100 nm to 100 µm, 100 nm to 50 µm, 100 nm to 10 µm, 100 nm to 5 µm, 100 nm to 2 µm, 100 nm to 1 µm, 100 nm to 500 nm, or 100 nm to 300 nm. The length of the fibrous carbon-based material may be, for example, 500 nm to 1000 µm, 500 nm to 500 µm, 500 nm to 100 µm, 500 nm to 50 µm, 500 nm to 10 µm, 1 µm to 10 µm, or 2 µm to 8 µm. As the length of the fibrous carbon-based material increases, the internal resistance of the electrode may decrease.

The fibrous carbon-based material may include, for example, a fibrous carbon nanostructure. The fibrous carbon nanostructure may include, for example, carbon nanofibers, carbon nanotubes, carbon nanobelts, or a combination thereof.

The carbon nanotubes may include, for example, a carbon nanotube primary structure, a carbon nanotube secondary structure formed by agglomeration of a plurality of carbon nanotube primary particles, or a combination thereof.

The carbon nanotube primary structure is a single carbon nanotube unit. In the carbon nanotube unit, a graphite sheet has a nano-sized cylindrical shape and an sp2 bonding structure. Depending on the angle and structure in which the graphite sheet is bent, it may exhibit conductor characteristics or semiconductor characteristics. The carbon nanotube unit may be classified into single-walled carbon nanotubes (SWCNTs), double-walled carbon nanotubes (DWCNTs), multi-walled carbon nanotubes (MWCNTs), etc., depending on the number of bonds forming the wall. As the wall thickness of the carbon nanotube unit decreases, the resistance decreases.

The carbon nanotube primary structure may include, for example, a single-walled carbon nanotube (SWCNT), a double-walled carbon nanotube (DWCNT), a multi-walled carbon nanotube (MWCNT), or a combination thereof. A diameter of the carbon nanotube primary structure may be, for example, 1 nm or more or 2 nm or more. The diameter of the carbon nanotube primary structure may be, for example, 20 nm or less or 10 nm or less. The diameter of the carbon nanotube primary structure may be, for example, 1 nm to 20 nm, 1 nm to 15 nm, or 1 nm to 10 nm. A length of the carbon nanotube primary structure may be, for example, 100 nm or more or 200 nm or more. The length of the carbon nanotube primary structure may be, for example, 2 µm or less, 1 µm or less, 500 nm or less, or 300 nm or less. The length of the carbon nanotube primary structure may be, for example, 100 nm to 2 µm, 100 nm to 1 µm, 100 nm to 500 nm, 100 nm to 400 nm, 100 nm to 300 nm, or 200 nm to 300 nm. The diameter and length of the carbon nanotube primary structure may be measured from a scanning electron microscope (SEM) or transmission electron microscope (TEM) image. Alternatively, the diameter and/or length of the carbon nanotube primary structure may be measured by a laser diffraction method.

The carbon nanotube secondary structure is a structure formed by aggregating carbon nanotube primary structures to entirely or partially form a bundle type or a rope type. The carbon nanotube secondary structure may include, for example, a bundle-type carbon nanotube, a rope-type carbon nanotube, or a combination thereof. A diameter of the carbon nanotube secondary structure may be, for example, 2 nm or more or 3 nm or more. The diameter of the carbon nanotube secondary structure may be, for example, 50 nm or less, 30 nm or less, 20 nm or less, or 10 nm or less. The diameter of the carbon nanotube secondary structure may be, for example, 2 nm to 50 nm, 2 nm to 30 nm, or 2 nm to 20 nm. A length of the carbon nanotube secondary structure may be, for example, 500 nm or more, 700 nm or more, 1 µm or more, or 10 µm or more. he length of the carbon nanotube secondary structure may be, for example, 1000 µm or less, 500 µm or less, or 100 µm or less. The length of the carbon nanotube secondary structure may be, for example, 500 nm to 1000 µm, 500 nm to 500 µm, 500 nm to 200 µm, 500 nm to 100 µm, 500 nm to 50 µm, 500 nm to 10 µm, 1 µm to 10 µm, or 2 µm to 8 µm. The diameter and length of the carbon nanotube secondary structure may be measured from a scanning electron microscope (SEM) image or an optical microscope. Alternatively, the diameter and/or length of the carbon nanotube secondary structure may be measured by a laser diffraction method.

The carbon nanotube secondary structure may, for example, be used for the preparation of the first anode active material layer (22) after being converted into carbon nanotube primary structures by being dispersed in a solvent or the like.

### [First Anode Active Material Layer: Binder]

The first anode active material layer (22) may further include a binder.

By the binder binding the first anode active material, the second anode active material, and the fibrous carbon-based material, it may be possible to more effectively suppress the disconnection of the conductive path between the first anode active material and the fibrous carbon-based material due to the volume change of the first anode active material during the precipitation and/or dissolution of lithium during charging and discharging. Non-uniformity of the electrode reaction of the all-solid-state secondary battery (1) may be suppressed.

The binder may improve the binding force between the first anode active material layer (22) and the solid electrolyte layer (30) or between the first anode active material layer (22) and the anode current collector (21). For example, the binder may improve the wettability between the first anode active material layer (22) and the solid electrolyte layer (30) or between the first anode active material layer (22) and the anode current collector (21). Accordingly, the binder may more effectively reduce an increase in interfacial resistance caused by the formation of pores or the like between the first anode active material layer (22) and the solid electrolyte layer (30) or between the first anode active material layer (22) and the anode current collector (21). The cycle characteristics of the all-solid-state secondary battery (1) may be improved.

When the binder is not included in the first anode active material layer, the surface of the solid electrolyte layer and/or the anode current collector may be exposed as the first anode active material layer is detached from the solid electrolyte layer and/or the anode current collector. For example, the exposed anode current collector may cause a short circuit. The cycle characteristics of the all-solid-state secondary battery may be deteriorated.

The binder is, for example, a polymer binder. The binder included in the first anode active material layer (22) is, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, or the like, but is not necessarily limited thereto, and any material used as a binder in the art may be used. The binder may consist of a single binder or a plurality of different binders. The binder may, for example, include a fluorine-based binder.

Since the first anode active material layer (22) includes the binder, the first anode active material layer (22) is stabilized on the anode current collector (21). In addition, cracking of the first anode active material layer (22) is suppressed despite a volume change and/or a relative position change of the first anode active material layer (22) during a charge and discharge process. For example, if the first anode active material layer (22) does not include a binder, it is possible for the first anode active material layer (22) to be easily separated from the anode current collector (21). In a portion where the anode current collector (21) is exposed due to the detachment of the first anode active material layer (22) from the anode current collector (21), the possibility of a short circuit occurring increases as the anode current collector (21) comes into contact with the solid electrolyte layer (30). The first anode active material layer (22) is prepared, for example, by coating a slurry in which materials constituting the first anode active material layer (22) are dispersed on the anode current collector (21) and drying the same. By including the binder in the first anode active material layer (22), stable dispersion of the anode active material and the fibrous carbon-based material in the slurry is possible. For example, when the slurry is coated on the anode current collector (21) by a screen printing method, it is possible to suppress clogging of the screen (for example, clogging caused by agglomerates of the anode active material).

The binder content may be 0.1 parts by weight to 20 parts by weight, 0.1 parts by weight to 15 parts by weight, 1 part by weight to 10 parts by weight, or 5 parts by weight to 10 parts by weight based on 100 parts by weight of the mixture of the first anode active material and the second anode active material. By having the binder content within these ranges, the cycle characteristics of the all-solid-state secondary battery (1) may be further improved.

### [1st Cathode Active Material Layer: Other Additives]

It is possible for the first anode active material layer (22) to further include additives used in a conventional all-solid-state secondary battery (1), such as a filler, a coating agent, a dispersant, and an ion-conductive auxiliary agent.

### [Anode Layer: First Anode Active Material Layer]

Referring to FIGS. 1 to 12, the cathode layer (10) includes a cathode active material layer (12), and the anode layer (20) includes a first anode active material layer (22).

An initial charge capacity (B) of the first anode active material layer (22) is, for example, 75 % or less, 70 % or less, 60 % or less, 50 % or less, 40 % or less, 30 % or less, 20 % or less, or 10 % or less of an initial charge capacity (A) of the cathode active material layer (12).

A ratio (B/A) of the initial charge capacity (B) of the first anode active material layer (22) to the initial charge capacity (A) of the cathode active material layer (12) is, for example, 0.01 to 0.75, 0.01 to 0.7, 0.01 to 0.6, 0.01 to 0.5, 0.01 to 0.6, 0.01 to 0.5, 0.01 to 0.4, 0.01 to 0.3, 0.01 to 0.2, or 0.01 to 0.1. The ratio (B/A) of the initial charge capacity (B) of the first anode active material layer (22) to the initial charge capacity (A) of the cathode active material layer (12) is, for example, 0.05 to 0.75, 0.1 to 0.7, 0.1 to 0.6, 0.2 to 0.6, 0.2 to 0.5, or 0.2 to 0.45. The initial charge capacity of the cathode active material layer (12) is determined by charging from a first open circuit voltage to a maximum charging voltage with respect to Li/Li+. The initial charge capacity of the first anode active material layer (22) is determined by charging from a second open circuit voltage to 0.01 V with respect to Li/Li+. The maximum charging voltage is determined according to the type of the cathode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be determined between 2.5 V to 3.0 V with respect to Li/Li+. For example, the maximum charging voltage of a lithium transition metal oxide may be determined between 3.0 V to 4.5 V with respect to Li/Li+.

The initial charge capacity (mAh) of the cathode active material layer (12) is obtained by multiplying a charge specific capacity (mAh/g) of the cathode active material by a mass (g) of the cathode active material in the cathode active material layer (12). When several types of cathode active materials are used, the value of (charge specific capacity × mass) is calculated for each cathode active material, and the sum of these values is the initial charge capacity of the cathode active material layer (12). The initial charge capacity of the first anode active material layer (22) is calculated in the same manner. The initial charge capacity of the first anode active material layer (22) is obtained by multiplying the charge specific capacity (mAh/g) of the anode active material by the mass of the anode active material in the first anode active material layer (22). When several types of anode active materials are used, the value of (charge specific capacity × mass) is calculated for each anode active material, and the sum of these values is the initial charge capacity of the first anode active material layer (22). The charge specific capacity of each of the cathode active material and the anode active material may be measured using an all-solid-state half-cell using lithium metal as a counter electrode. The initial charge capacity of each of the cathode active material layer (12) and the first anode active material layer (22) may be directly measured using an all-solid-state half-cell at a constant current density, for example, 0.1 mA/cm2. For the cathode, the measurement may be performed for an operating voltage from a first open circuit voltage (OCV) to a maximum charging voltage, for example, 3.0 V (vs. Li/Li+). For the anode, the measurement may be performed for an operating voltage from a second open circuit voltage (OCV) to 0.01 V with respect to the anode, for example, lithium metal. For example, an all-solid-state half-cell having a cathode active material layer may be charged at a constant current of 0.1 mA/cm² from the first open circuit voltage to 3.0 V. An all-solid-state half-cell having a first anode active material layer may be charged at a constant current of 0.1 mA/cm2 from the second open circuit voltage to 0.01 V. The current density during constant current charging may be, for example, 0.2 mA/cm2 or 0.5 mA/cm2. An all-solid-state half-cell having a cathode active material layer may, for example, be charged from the first open circuit voltage to 2.5 V, 2.0 V, 3.5 V, 4.0 V, or 4.5 V. The maximum charging voltage of the cathode active material layer may be determined by the maximum voltage of the battery satisfying safety conditions according to JISC8712:2015 of the Japanese Standards Association.

If the initial charge capacity of the first anode active material layer (22) is excessively small, the thickness of the first anode active material layer (22) becomes very thin, and thus lithium dendrites formed between the first anode active material layer (22) and the anode current collector (21) during repeated charging and discharging processes collapse the first anode active material layer (22), making it difficult to improve the cycle characteristics of the all-solid-state secondary battery (1). If the charge capacity of the first anode active material layer (22) excessively increases, the energy density of the all-solid-state secondary battery (1) decreases and the internal resistance of the all-solid-state secondary battery (1) due to the first anode active material layer (22) increases, making it difficult to improve the cycle characteristics of the all-solid-state secondary battery (1).

A thickness of the first anode active material layer (22) is, for example, 50% or less, 40% or less, 30% or less, 20% or less, or 10% or less of a thickness of the cathode active material layer (12). The thickness of the first anode active material layer (22) is, for example, 1% to 50%, 1% to 40%, 1% to 30%, 1% to 20%, or 1% to 10% of the thickness of the cathode active material layer (12). The thickness of the first anode active material layer (22) is, for example, 1 µm to 50 µm, 2 µm to 40 µm, 3 µm to 30 µm, 4 µm to 20 µm, or 5 µm to 20 µm. The thickness of the first anode active material layer (22) is, for example, 5 µm to 50 µm, 10 µm to 50 µm, 15 µm to 50 µm, 20 µm to 50 µm, or 25 µm to 50 µm. If the thickness of the first anode active material layer (22) is excessively thin, lithium dendrites formed between the first anode active material layer (22) and the anode current collector (21) collapse the first anode active material layer (22), and thus it may be difficult to improve the cycle characteristics of the all-solid-state secondary battery (1). If the thickness of the first anode active material layer (22) excessively increases, the energy density of the all-solid-state secondary battery (1) decreases and the internal resistance of the all-solid-state secondary battery (1) due to the first anode active material layer (22) increases, and thus it may be difficult to improve the cycle characteristics of the all-solid-state secondary battery (1). As the thickness of the first anode active material layer (22) decreases, for example, an initial charge capacity of the first anode active material layer (22) also decreases.

### [Anode Layer: Second Anode Active Material Layer]

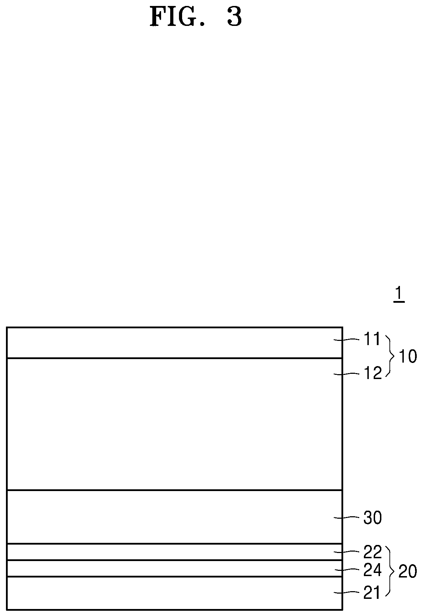

Referring to FIG. 3, after being charged, the all-solid-state secondary battery (1) may further include, for example, a second anode active material layer (24) disposed between the anode current collector (21) and the first anode active material layer (22). The second anode active material layer (24) is a metal layer including lithium or a lithium alloy. The metal layer includes lithium or a lithium alloy. Accordingly, since the second anode active material layer (24) is a metal layer including lithium, it acts as, for example, a lithium reservoir. The lithium alloy is, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any material used as a lithium alloy in the art may be used. The second anode active material layer (24) may consist of one of these alloys or lithium, or may consist of several types of alloys. The second anode active material layer (24) is, for example, a plated layer. The second anode active material layer (24) is, for example, deposited between the first anode active material layer (22) and the anode current collector (21) during a charging process of the all-solid-state secondary battery (1).

A thickness of the second anode active material layer (24) is not particularly limited, but is, for example, 1 µm to 200 µm, 1 µm to 150 µm, 1 µm to 100 µm, 1 µm to 50 µm, 1 µm to 30 µm, 1 µm to 22 µm, or 1 µm to 10 µm. If the thickness of the second anode active material layer (24) is excessively thin, it is difficult for the second anode active material layer (24) to perform a role as a lithium reservoir. If the thickness of the second anode active material layer (24) is excessively thick, the mass and volume of the all-solid-state secondary battery (1) increase, and cycle characteristics of the all-solid-state secondary battery (1) may rather be deteriorated.

The thickness of the second anode active material layer (24) may be, for example, smaller than the thickness of the first anode active material layer (22). The thickness of the second anode active material layer (24) may be, for example, 70% or less, 60% or less, 50% or less, 40% or less, or 30% or less of the thickness of the first anode active material layer (22). The thickness of the second anode active material layer (24) may be, for example, 1% to 70%, 1% to 60%, 1% to 50%, 1% to 40%, or 1% to 30% of the thickness of the first anode active material layer (22). As the thickness of the second anode active material layer (24) becomes smaller than the thickness of the first anode active material layer (22), a volume change during charging and discharging of the all-solid-state secondary battery may be suppressed. Consequently, deterioration may be suppressed due to the volume change of the all-solid-state secondary battery.

Alternatively, in the all-solid-state secondary battery (1), the second anode active material layer (24) may be disposed, for example, between the anode current collector (21) and the first anode active material layer (22) before assembly of the all-solid-state secondary battery (1). When the second anode active material layer (24) is disposed between the anode current collector (21) and the first anode active material layer (22) before the assembly of the all-solid-state secondary battery (1), the second anode active material layer (24) acts as a lithium reservoir because it is a metal layer including lithium. For example, lithium foil may be disposed between the anode current collector (21) and the first anode active material layer (22) before the assembly of the all-solid-state secondary battery (1).

When the second anode active material layer (24) is deposited by charging after the assembly of the all-solid-state secondary battery (1), the energy density of the all-solid-state secondary battery (1) increases because the second anode active material layer (24) is not included at the time of assembly of the all-solid-state secondary battery (1). During charging of the all-solid-state secondary battery (1), the battery is charged exceeding the charge capacity of the first anode active material layer (22). That is, the first anode active material layer (22) is overcharged. At the beginning of charging, lithium is absorbed into the first anode active material layer (22). The anode active material included in the first anode active material layer (22) forms an alloy or a compound with lithium ions moved from the cathode (10). When charging is performed exceeding the capacity of the first anode active material layer (22), lithium is deposited, for example, on the back surface of the first anode active material layer (22), that is, between the anode current collector (21) and the first anode active material layer (22), and a metal layer corresponding to the second anode active material layer (24) is formed by the deposited lithium. The second anode active material layer (24) is a metal layer mainly composed of lithium (i.e., metallic lithium). These results are obtained, for example, because the anode active material included in the first anode active material layer (22) includes a material that forms an alloy or a compound with lithium. During discharging, lithium in the first anode active material layer (22) and the second anode active material layer (24), that is, the metal layer, is ionized and moves toward the cathode (10). Accordingly, it is possible to use lithium as an anode active material in the all-solid-state secondary battery (1). In addition, since the first anode active material layer (22) covers the second anode active material layer (24), it serves as a protective layer for the second anode active material layer (24), i.e., the metal layer, and at the same time, serves to suppress the deposition and growth of lithium dendrites. Accordingly, a short circuit and capacity reduction of the all-solid-state secondary battery (1) are suppressed, and as a result, the cycle characteristics of the all-solid-state secondary battery (1) are improved. Furthermore, when the second anode active material layer (24) is disposed by charging after assembly of the all-solid-state secondary battery (1), the anode (20), that is, the anode current collector (21), the first anode active material layer (22), and a region therebetween, are Li-free regions that do not include lithium (Li) in an initial state or a state after complete discharge of the all-solid-state secondary battery (1).

### [Anode Layer: Anode Current Collector]

The anode current collector (21) is composed of, for example, a material that does not react with lithium, that is, forms neither an alloy nor a compound. Materials constituting the anode current collector (21) include, for example, copper (Cu), stainless steel, titanium (Ti), iron (Fe), cobalt (Co), and nickel (Ni), but are not necessarily limited thereto, and any material used as an electrode current collector in the art may be used. The anode current collector (21) may be composed of one type of the above-mentioned metals, or may be composed of an alloy or a coating material of two or more types of metals. The anode current collector (21) is, for example, in a plate or foil shape.

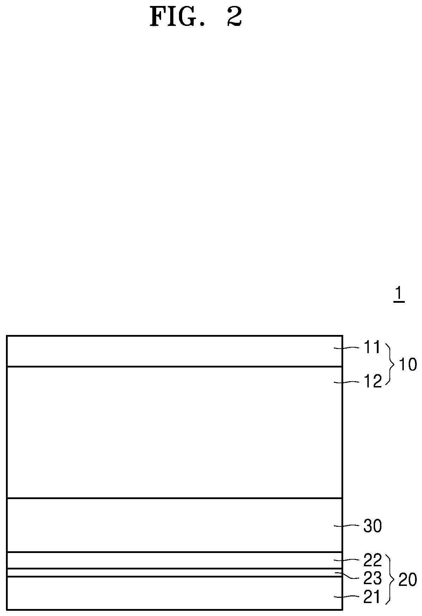

Referring to FIG. 2, the all-solid-state secondary battery (1) may further include a thin film (23) including an element capable of forming an alloy with lithium on one surface of the anode current collector (21). The thin film (23) is disposed between the anode current collector (21) and the first anode active material layer (22). The thin film (23) includes, for example, an element capable of forming an alloy with lithium. Elements capable of forming an alloy with lithium include, for example, gold, silver, zinc, tin, indium, silicon, aluminum, bismuth, and the like, but are not necessarily limited thereto, and any element capable of forming an alloy with lithium in the art may be used. The thin film (23) is composed of one of these metals or an alloy of several types of metals. By disposing the thin film (23) on one surface of the anode current collector (21), for example, a deposition form of the second anode active material layer (24) deposited between the thin film (23) and the first anode active material layer (22) may become flatter, and cycle characteristics of the all-solid-state secondary battery (1) may be further improved.

A thickness of the thin film (23) is, for example, 1 nm to 800 nm, 10 nm to 700 nm, 50 nm to 600 nm, or 100 nm to 500 nm. When the thickness of the thin film (23) is less than 1 nm, it may be difficult for the functions of the thin film (23) to be exerted. If the thickness of the thin film (23) is excessively thick, the thin film (23) itself absorbs lithium, which reduces the amount of lithium deposited at the anode, thereby lowering the energy density of the all-solid-state battery and potentially deteriorating the cycle characteristics of the all-solid-state secondary battery (1). The thin film (23) may be disposed on the anode current collector (21) by, for example, a vacuum deposition method, a sputtering method, a plating method, or the like, but is not necessarily limited thereto, and any method capable of forming the thin film (23) in the art may be used.

Although not shown in the drawings, the anode current collector (21) may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes the insulating thermoplastic polymer, the base film softens or liquefies when a short circuit occurs, thereby blocking battery operation and suppressing a rapid increase in current. The metal layer may include, for example, copper (Cu), stainless steel, titanium (Ti), iron (Fe), cobalt (Co), nickel (Ni), or alloys thereof. The anode current collector (21) may additionally include a metal chip and/or a lead tab. For more specific details on the base film, the metal layer, the metal chip, and the lead tab of the anode current collector (21), refer to the cathode current collector (11) described above. Since the anode current collector (21) has such a structure, the weight of the anode may be reduced, and consequently, the energy density of the anode and the lithium battery may be improved.

### [Anode Layer: First Inactive Member]

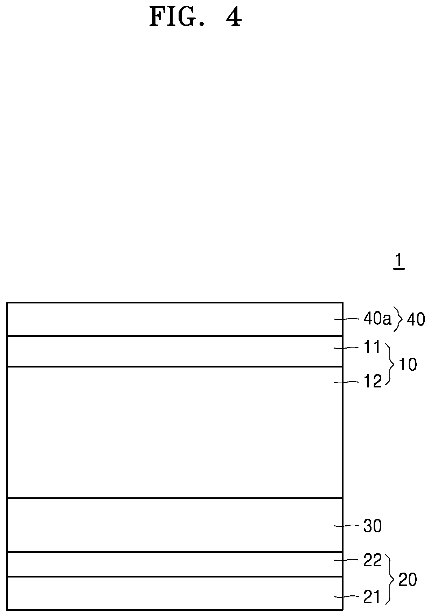

Referring to FIGS. 4 to 5 and FIGS. 8 to 12, the all-solid-state secondary battery (1) may further include a first inactive member (40, 40a, 40b) disposed on at least one of the other surface of the anode current collector (21) and the other surface of the cathode current collector (11).

The first inactive member (40, 40a, 40b) may not include an electrode active material. The first inactive member (40, 40a, 40b) may be, for example, an insulating member.

The first inactive member (40, 40a, 40b) may have conductivity by additionally including a conductive material. The first inactive member (40, 40a, 40b) may be, for example, a flame-retardant inactive member by additionally including a flame retardant.

The first inactive member (40, 40a, 40b) may be, for example, an elastic member. The first inactive member (40, 40a, 40b) may be, for example, a porous elastic member. The first inactive member (40, 40a, 40b) may be, for example, an elastic member having one or more of porosity, conductivity, and flame retardancy.

The first inactive member (40, 40a, 40b) imparts a buffering function to the all-solid-state secondary battery (1). The first inactive member (40, 40a, 40b) provides, for example, stress relaxation and restoring force. The first inactive member (40, 40a, 40b) effectively accommodates a volume change of the all-solid-state secondary battery (1) and may apply a constant pressure to the all-solid-state secondary battery (1).

The first inactive member (40, 40a, 40b) may have, for example, a lower elastic modulus than that of the anode current collector (21). Since the first inactive member (40, 40a, 40b) has a lower elastic modulus than that of the anode current collector (21), it may more effectively accommodate the volume change of the anode layer (20) during charging and discharging of the all-solid-state secondary battery (1). he first inactive member (40) may effectively relieve internal stress according to the volume change of the all-solid-state secondary battery (1) during charging and discharging of the all-solid-state secondary battery (1), thereby improving the cycle characteristics of the all-solid-state secondary battery (1).

The first inactive member (40, 40a, 40b) may, for example, be disposed on the anode layer (20) of the all-solid-state secondary battery (1). When a volume change of the anode layer (20) during charging and discharging of the all-solid-state secondary battery (1) is relatively larger than those of the cathode layer (10) and the solid electrolyte layer (30), the first inactive member (40, 40a, 40b) is disposed adjacent to the anode layer (20), thereby more effectively accommodating the volume change of the anode layer (20). In addition, since the first inactive member (40, 40a, 40b) applies a constant pressure to the anode layer (20), it may induce, for example, uniform deposition of lithium metal in the anode layer (20). Accordingly, the generation of defects in the all-solid-state secondary battery (1) due to non-uniform deposition of lithium metal may be more effectively prevented.

Alternatively, the first inactive member (40, 40a, 40b) may, for example, be disposed on the cathode layer (10) of the all-solid-state secondary battery (1). Since the first inactive member (40, 40a, 40b) is disposed adjacent to the cathode layer (10), the volume change of the all-solid-state secondary battery (1) may be more effectively accommodated. In addition, since the first inactive member (40, 40a, 40b) applies a constant pressure to the all-solid-state secondary battery (1), it may induce, for example, uniform deposition of lithium metal in the anode layer (20). Accordingly, the generation of defects in the all-solid-state secondary battery (1) due to non-uniform deposition of lithium metal may be more effectively prevented.

The first inactive member (40, 40a, 40b) may include a polymer material, a rubber material, or a combination thereof. Since the first inactive member (40, 40a, 40b) includes the polymer material, the rubber material, or a combination thereof, the first inactive member (40, 40a, 40b) may have stress relaxation and restoring force. The polymer material may include, for example, a polyurethane-based polymer, a polyacrylic-based polymer, a polystyrene-based polymer, a polyester-based polymer, a polyamide-based polymer, a polyolefin-based polymer, or a combination thereof. The polymer material may be, for example, a polymer resin. The polymer material may be, for example, a polymer resin. The polymer material may be, for example, an adhesive resin. The rubber material may include, for example, natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene (CR), halogenated isoprene rubber, halogenated isobutylene copolymer, chloroprene rubber, butyl rubber (IIR), halogenated isobutylene-p-methylstyrene rubber, or a combination thereof.. The polyurethane-based polymer may include, for example, a polyester-based polyurethane, a polyether-based polyurethane, or a combination thereof. The polyacrylic-based polymer may include, for example, polyacrylate, polymethyl acrylate, polymethacrylate, polymethyl methacrylate, or a combination thereof. The polystyrene-based polymer may include, for example, a styrene-ethylene-butylene copolymer (SEB), a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (styrene-ethylene-propylene-styrene copolymer (SEPS)), a styrene-isobutylene-styrene copolymer (SIBS), styrene-butadiene-styrene-butadiene (SBSB), styrene-butadiene-styrene-butadiene-styrene (SBSBS), polystyrene (PS), acrylonitrile styrene copolymer (AS), acrylonitrile butadiene styrene copolymer (ABS), or a combination thereof. The polyester-based polymer may include, for example, polyethylene terephthalate, polybutylene terephthalate, or a combination thereof. The polyamide-based polymer may include, for example, polyamide 6, polyamide 11, polyamide 12, polyamide 66, polyamide 610, or a combination thereof. The polyolefin-based polymer may include, for example, polyethylene, polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, 1-butene-4-methyl-pentene, an ethylene-methacrylic acid copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer (EVA), a polyolefin of a propylene-vinyl acetate copolymer, or a combination thereof.

The first inactive member (40, 40a, 40b) may include, for example, a porous foam, a porous sponge, or a combination thereof. The first inactive member (40, 40a, 40b) may include, for example, a porous foam sheet, a porous sponge sheet, or a combination thereof. Since the first inactive member (40, 40a, 40b) has such a shape, porosity and a buffering function may be simultaneously provided. The porous foam may include, for example, a closed cell, an open cell, or a combination thereof. The porous sponge may include, for example, a closed cell, an open cell, or a combination thereof. The closed cell refers to, for example, a closed pore that is not connected to the surrounding atmosphere. The open cell refers to, for example, an open pore that is connected to the surrounding atmosphere. The first inert member (40, 40a, 40b) may include, for example, a closed-cell porous foam, an open-cell porous foam, a closed-cell porous sponge, an open-cell porous sponge, or a combination thereof. The porous foam may, for example, simultaneously include closed cells and open cells. The porous sponge may, for example, simultaneously include closed cells and open cells.

The first inactive member (40, 40a, 40b) may, for example, include a conductive material. The conductive material is, for example, graphite, carbon black, acetylene black, Ketjen black, Denka black, carbon fiber, carbon nanotube (CNT), graphene, metal fiber, metal powder, or the like. A content of the conductive material included in the first inactive member (40, 40a, 40b) is, for example, 1 part by weight to 30 parts by weight, 1 part by weight to 20 parts by weight, 1 part by weight to 15 parts by weight, 1 part by weight to 10 parts by weight, 5 parts by weight to 40 parts by weight, 5 parts by weight to 30 parts by weight, or 5 parts by weight to 35 parts by weight, based on 100 parts by weight of the first inactive member (40, 40a, 40b). Since the first inactive member (40, 40a, 40b) has conductivity, it may perform a role as an anode current collector.

The first inactive member (40, 40a, 40b) includes, for example, a matrix and a filler. The matrix includes, for example, a base material and a reinforcing material. The matrix includes, for example, a fibrous substrate and a fibrous reinforcement. Since the matrix includes the fibrous base material, the matrix may have elasticity. The fibrous base material includes, for example, one or more selected from pulp fiber, an insulating polymer fiber, and an ion-conductive polymer fiber. The strength of the matrix is improved by the matrix including the reinforcing material. The fibrous reinforcing material is, for example, glass fiber, metal oxide fiber, ceramic fiber, or the like. The fibrous reinforcing material is, for example, a flame-retardant material. The filler is, for example, a moisture getter and/or a flame retardant. The filler is, for example, a metal hydroxide having moisture adsorbability. The metal hydroxide included in the filler is, for example, Mg(OH)₂, Fe(OH)₃, Sb(OH)₃, Sn(OH)₄, TI(OH)₃, Zr(OH)₄, Al(OH)₃, or a combination thereof.

A thickness of the first inactive member (40, 40a, 40b) is, for example, 1 µm to 300 µm, 10 µm to 200 µm, 10 µm to 100 µm, or 10 µm to 50 µm. If the thickness of the first inactive member (40, 40a, 40b) is excessively thin, it may be difficult to provide the intended effect, and if the thickness of the first inactive member (40, 40a, 40b) is excessively thick, the energy density of the all-solid-state secondary battery (1) may be reduced. A shape of the first inactive member (40, 40a, 40b) is not particularly limited and may be selected according to the shape of the all-solid-state secondary battery (1). The first inactive member (40, 40a, 40b) may be, for example, in a sheet shape, a rod shape, or a gasket shape. The first inactive member (40, 40a, 40b) may, for example, be omitted.

### [Cathode Layer]

### [Cathode Active Material Layer: Cathode Active Material]

Referring to FIGS. 1 to 12, the cathode layer (10) includes a cathode active material layer (12). The cathode active material layer (12) includes a cathode active material.

The cathode active material included in the cathode active material layer (12) is a cathode active material capable of reversibly absorbing and desorbing lithium ions. The cathode active material includes, for example, an oxide-based cathode active material, a sulfide-based cathode active material, or a combination thereof.

The oxide-based cathode active material includes, for example, a lithium transition metal oxide, a metal oxide, or a combination thereof. The lithium transition metal oxide includes, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. The metal oxide includes, for example, iron oxide, vanadium oxide, or a combination thereof.

The sulfide-based cathode active material includes, for example, nickel sulfide, copper sulfide, Li₂S, a composite containing Li₂S, or a combination thereof.

As the oxide-based cathode active material, for example, one or more types of composite oxides of lithium and a metal selected from cobalt, manganese, nickel, and a combination thereof may be used. The lithium-containing oxide-based cathode active material may include, for example, a compound represented by any one of the following formulas: LiₐA_{1-b}B'_{b}D₂ (where 0.90 ≤ a ≤ 1, and 0 ≤ b ≤ 0.5); LiₐE_{1-b}B'_{b}O_{2-c}D_{c} (where 0.90 ≤ a ≤ 1, 0 ≤ b ≤ 0.5, and 0 ≤ c ≤ 0.05); LiE_{2-b}B'_{b}O_{4-c}D_{c} (where 0 ≤ b ≤ 0.5, and 0 ≤ c ≤ 0.05); LiₐNi_{1-b-c}Co_{b}B'_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (where 0.90 ≤ a ≤ 1, 0 ≤ b ≤ 0.5, 0 ≤ c ≤ 0.05, 0 < α < 2); LiₐNi_{1-b-c}Mn_{b}B'_{c}D_{α} (where 0.90 ≤ a ≤ 1, 0 ≤ b ≤ 0.5, 0 ≤ c ≤ 0.05, 0 < α ≤ 2); LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, 0 < α < 2); LiₐNi_{b}E_{c}G_{d}O₂ (where 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤ 0.5, 0.001 ≤ e ≤ 0.1); LiₐNiG_{b}O₂ (where 0.90 ≤ a ≤ 1, 0.001 ≤ b ≤ 0.1); LiₐCoG_{b}O₂ (where 0.90 ≤ a ≤ 1, 0.001 ≤ b ≤ 0.1); LiₐMnG_{b}O₂ (where 0.90 ≤ a ≤ 1, 0.001 ≤ b ≤ 0.1); LiₐMn₂G_{b}O₄ (where 0.90 ≤ a ≤ 1, 0.001 ≤ b ≤ 0.1); LiV₂O₅; LiI'O₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the formulas representing the above-mentioned compounds, A is Ni, Co, Mn, or a combination thereof; B' is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. It is also possible to use a compound in which a coating layer is added to the surface of the above-mentioned compound, and it is also possible to use a mixture of the above-mentioned compound and a compound in which a coating layer is added. The coating layer added to the surface of the above-mentioned compound includes, for example, a coating element compound such as an oxide, a hydroxide, an oxyhydroxide, an oxycarbonate, or a hydroxycarbonate of a coating element. The compound forming such a coating layer is amorphous or crystalline. The coating element included in the coating layer is Mg, Al, Co, K, Na, Ca, Si, Ti, V, Sn, Ge, Ga, B, As, Zr, or a mixture thereof. A method for forming the coating layer is selected within a range that does not adversely affect the physical properties of the cathode active material. The coating method is, for example, spray coating, a dipping method, or the like. Since specific coating methods are well understood by those skilled in the art, detailed descriptions thereof will be omitted.

The oxide-based cathode active material may include, for example, a lithium transition metal oxide represented by the following formulae 1 to 8:

Formula 1 LiₐNiₓCo_{y}M_{z}O_{2-b}A_{b}

In Formula 1, $1.0 \leq a \leq 1.2 , 0 \leq b \leq 0.2 , 0.8 \leq x < 1 , 0 \leq y \leq 0.3 , 0 < z \leq 0.3 , and x + y + z = 1 ,$
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof,
A is F, S, Cl, Br, or a combination thereof,

   Formula 2 LiNiₓCo_{y}Mn_{z}O₂

   Formula 3 LiNiₓCo_{y}Al_{z}O₂

In Formulae 2 to 3, 0.8≤x≤0.95, 0≤y≤0.2, 0<z≤0.2 and x+y+z=1,

Formula 4 LiNiₓCo_{y}Mn_{z}Al_{w}O₂

In Formula 4, 0.8≤x≤0.95, 0≤y≤0.2, 0<z≤0.2, 0<w≤0.2, and x+y+z+w=1,

Formula 5 LiₐCoₓM_{y}O_{2-b}A_{b}

In Formula 5, $1.0 \leq a \leq 1.2 , 0 \leq b \leq 0.2 , 0.9 \leq x \leq 1 , 0 \leq y \leq 0.1 , and x + y = 1 ,$ and
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof;
A is F, S, Cl, Br, or a combination thereof, and

   Formula 6 LiₐNiₓMn_{y}M'_{z}O_{2-b}A_{b}

In Formula 6, $1.0 \leq a \leq 1.2 , 0 \leq b \leq 0.2 , 0 < x \leq 0.3 , 0.5 \leq y < 1 , 0 < z \leq 0.3 , and x + y + z = 1 ,$
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof;
A is F, S, Cl, Br, or a combination thereof,

   Formula 7 LiₐM1ₓM2_{y}PO_{4-b}X_{b}
in Formula 7, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof; X is O, F, S, P, or a combination thereof.

   Formula 8 LiₐM3_{z}PO₄

In Formula 8, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof.

The oxide-based cathode active material may be covered by a coating layer. As the coating layer, any material known as a coating layer for a cathode active material of an all-solid-state secondary battery may be used. The coating layer is, for example, Li₂O-ZrO₂ (LZO) or the like.

A size of the oxide-based cathode active material may be, for example, 0.1 µm to 30 µm, 0.5 µm to 20 µm, or 1 µm to 150 µm. The oxide-based cathode active material may be, for example, single-crystalline particles or polycrystalline particles.

The sulfide-based cathode active material may include, for example, a composite containing Li₂S. The composite containing Li₂S includes, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon includes carbon. As the carbon, for example, any material including carbon atoms may be used as long as it is used as a conductive material in the art. The carbon may be, for example, crystalline carbon, amorphous carbon, or a combination thereof. The carbon may be, for example, a calcined product of a carbon precursor. The carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. The carbon nanostructure may be, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The porous carbon may include, for example, periodic and regular two-dimensional or three-dimensional pores. The porous carbon may be, for example, carbon black such as Ketjen black, acetylene black, Denka black, thermal black, or channel black; graphite, activated carbon, or a combination thereof. A form of the carbon is, for example, a particle form, a sheet form, a fibrous form, or the like, but is not limited thereto, and any material used as carbon in the art may be used. A method of preparing the composite of Li₂S and carbon may be a dry method, a wet method, or a combination thereof, but is not limited thereto. The method of preparing the composite of Li₂S and carbon includes, for example, milling, heat treatment, deposition, and the like, but is not necessarily limited thereto, and any method used in the art may be used.

The composite of Li₂S, carbon, and a solid electrolyte includes carbon and a solid electrolyte. For the carbon, reference is made to the above-mentioned composite of Li₂S and carbon. As the solid electrolyte, for example, any amorphous solid electrolyte used as an ion-conductive material in the art may be used. The solid electrolyte is, for example, an inorganic solid electrolyte. The solid electrolyte is, for example, a crystalline solid electrolyte, an amorphous solid electrolyte, or a combination thereof. The solid electrolyte is, for example, a sulfide-based solid electrolyte, an oxide-based solid electrolyte, or a combination thereof. The sulfide-based solid electrolyte includes, for example, Li, S, and P, and may optionally further include a halogen element. The sulfide-based solid electrolyte may be selected from sulfide-based solid electrolytes used in a solid electrolyte layer. The sulfide-based solid electrolyte may have an ionic conductivity of, for example, 1×10⁻⁵ S/cm or more at room temperature. The sulfide-based solid electrolyte may include, for example, at least one selected from Li₃PO₄-Li₂SO₄, Li₂S-P₂S₅, Li₂S-P₂S₅-LiX, where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, where m and n are positive numbers, and Z is one of Ge, Zn, or Ga, Li₂S-GeS₂, Li₂S-SiS₂-Li₃PO₄, Li₂S-SiS₂-LiₚMO_{q}, where p and q are positive numbers, and M is one of P, Si, Ge, B, Al, or Ga, or In, Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The oxide-based solid electrolyte includes, for example, Li, O, and a transition metal element, and may optionally further include other elements. The oxide-based solid electrolyte may be, for example, a solid electrolyte having an ionic conductivity of 1×10⁻⁵ S/cm or more at room temperature. The oxide-based solid electrolyte may be selected from oxide-based solid electrolytes used in a solid electrolyte layer. The solid electrolyte may be, for example, a mixture of a sulfide-based solid electrolyte and a lithium salt. For example, it may be a mixture of Li₃PO₄-Li₂SO₄ and a binary lithium salt, or a mixture of Li₃PO₄-Li₂SO₄ and a ternary lithium salt.

The composite of Li₂S and a solid electrolyte includes a solid electrolyte. For the solid electrolyte, reference is made to the above-mentioned composite of Li₂S, carbon, and a solid electrolyte.

The composite of Li₂S and a lithium salt includes a lithium salt compound. The lithium salt compound, for example, does not include a sulfur (S) atom. The lithium salt compound may be, for example, a binary compound consisting of lithium and one type of element selected from Group 13 to Group 17 of the periodic table of elements. The binary compound may include, for example, at least one selected from, LiF, LiCl, LiBr, LiI, LiH, Li₂S, Li₂O, Li₂Se, Li₂Te, Li₃N, Li₃P, Li₃As, Li₃Sb, LiI₃, and LiB₃. The lithium salt compound may be, for example, a ternary compound consisting of lithium and two types of elements selected from Group 13 to Group 17 of the periodic table of elements. The ternary compound includes, for example, one or more selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is particularly one or more lithium halide compounds selected from LiF, LiCl, LiBr, and LiI. The composite of Li₂S and a solid electrolyte includes a solid electrolyte. For the solid electrolyte, reference is made to the solid electrolyte used in the above-mentioned composite of Li₂S, carbon, and a solid electrolyte. The composite of Li₂S and a solid electrolyte includes, for example, a composite of Li₂S and one or more lithium salts selected from LiF, LiCl, LiBr, LiI, LiH, Li₂S, Li₂O, Li₂Se, Li₂Te, Li₃N, Li₃P, Li₃As, Li₃Sb, LiI₃, and LiB₃.

The composite of Li₂S, a lithium salt, and carbon includes a lithium salt compound and carbon. For the lithium salt compound, reference is made to the above-mentioned composite of Li₂S and a lithium salt. For the carbon, reference is made to the above-mentioned composite of Li₂S and carbon.

The composite of Li₂S and a metal carbide includes a metal carbide. The metal carbide is, for example, a two-dimensional metal carbide. The two-dimensional metal carbide is, for example, MXene. The two-dimensional metal carbide is represented by, for example, Mₙ₊₁CₙTₓ (where M is a transition metal, T is a terminal group, T is O, OH and/or F, n=1, 2, or 3, and x is the number of terminal groups). The two-dimensional metal carbide is, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or combinations thereof. The surface of two-dimensional metal carbides is terminated with O, OH and/or F.

A composite of Li₂S, carbon, and a metal carbide includes carbon and a metal carbide. For the carbon, reference is made to the above-mentioned composite of Li₂S and carbon. For the metal carbide, reference is made to the above-mentioned composite of Li₂S and a metal carbide.

A composite of Li₂S and a metal nitride includes a metal nitride. The metal nitride is, for example, a two-dimensional metal nitride. The two-dimensional metal nitride is represented by, for example,Mₙ₊₁NₙTₓ (where M is a transition metal, T is a terminal group, T is O, OH and/or F, n=1, 2, or 3, and x is the number of terminal groups). The surface of the two-dimensional metal nitride is terminated with O, OH and/or F.

A composite of Li₂S, carbon, and a metal nitride includes carbon and a metal nitride. For the carbon, refer to the above-mentioned composite of Li₂S and carbon. For the metal nitride, reference is made to the above-mentioned composite of Li₂S and a metal nitride.

The Li₂S-containing composite may, for example, further include a second fibrous sulfide-based solid electrolyte (not shown). The Li₂S-containing composite may be a composite of Li₂S and a second fibrous sulfide-based solid electrolyte, or a composite of Li₂S, a second fibrous sulfide-based solid electrolyte, and the above-mentioned carbon, solid electrolyte, lithium salt, metal carbide, or metal nitride. In addition, the cathode active material layer may further include a first fibrous sulfide-based solid electrolyte (not shown).

By the Li₂S-containing composite further including the second fibrous sulfide-based solid electrolyte, deterioration of the lithium battery is further suppressed, and cycle characteristics of the lithium battery may be further improved. A size of the second fibrous sulfide-based solid electrolyte may be smaller than a size of the first fibrous sulfide-based solid electrolyte. A length and/or a thickness of the second fibrous sulfide-based solid electrolyte may respectively be 50% or less, 40% or less, 30% or less, 20% or less, or 10% or less of a length and/or a thickness of the first fibrous sulfide-based solid electrolyte. The length and/or the thickness of the second fibrous sulfide-based solid electrolyte may respectively be 0.1% to 50%, 0.5% to 40%, 1% to 30%, 1% to 20%, or 1% to 10% of the length and/or the thickness of the first fibrous sulfide-based solid electrolyte. The second fibrous sulfide-based solid electrolyte may, for example, have the same shape as the first fibrous sulfide-based solid electrolyte and have a smaller size. Since the second fibrous sulfide-based solid electrolyte has such a reduced length and/or thickness, it may be easily distributed within the Li₂S-containing composite. Since the second fibrous sulfide-based solid electrolyte has such a reduced length and/or thickness, deterioration of the lithium battery is further suppressed, and cycle characteristics of the lithium battery may be further improved.

A size of the sulfide-based cathode active material may be, for example, 0.1 µm to 50 µm, 0.5 µm to 30 µm, 0.5 µm to 20 µm, or 1 µm to 10 µm. A size of the Li₂S may be, for example, 1 nm to 10 µm, 10 nm to 5 µm, 10 nm to 3 µm, or 10 nm to 1 µm. A size of the Li₂S-containing composite may be, for example, 0.1 µm to 50 µm, 0.5 µm to 30 µm, 0.5 µm to 20 µm, or 1 µm to 10 µm.

A shape of the cathode active material is, for example, a particle shape such as a true spherical shape, an elliptical spherical shape, or the like. A particle diameter of the cathode active material is not particularly limited and is within a range applicable to a cathode active material of a conventional all-solid-state secondary battery. A content of the cathode active material included in the cathode layer (10) is also not particularly limited and is within a range applicable to a cathode layer of a conventional all-solid-state secondary battery. A content of the cathode active material included in the cathode active material layer (12) may be, for example, 10 wt% to 99 wt%, 10 wt% to 90 wt%, 10 wt% to 80 wt%, 10 wt% to 70 wt%, or 10 wt% to 50 wt% based on the total weight of the cathode active material layer (12).

### [Cathode Active Material Layer: Solid Electrolyte]

The cathode active material layer (12) may, for example, further include a solid electrolyte. The solid electrolyte may be, for example, a sulfide-based solid electrolyte. The solid electrolyte included in the cathode layer (10) may be the same as or different from the solid electrolyte included in the solid electrolyte layer (30). For details on the solid electrolyte, reference is made to the section on the solid electrolyte layer (30).

The solid electrolyte included in the cathode active material layer (12) may have a smaller D50 average particle diameter than that of the solid electrolyte included in the solid electrolyte layer (30). For example, the D50 average particle diameter of the solid electrolyte included in the cathode active material layer (12) may be 90% or less, 80% or less, 70% or less, 60% or less, 50% or less, 40% or less, 30% or less, or 20% or less of the D50 average particle diameter of the solid electrolyte included in the solid electrolyte layer (30). The D50 average particle diameter is, for example, a median particle diameter (D50). The median particle diameter (D50) is, for example, a particle size corresponding to a 50\% cumulative volume calculated from a side of particles having smaller particle sizes in a particle size distribution measured by a laser diffraction method.

The solid electrolyte content included in the positive electrode active material layer (12) may be, for example, 1 wt% to 40 wt%, 1 wt% to 30 wt%, 1 wt% to 20 wt%, or 1 wt% to 10 wt% of the total weight of the positive electrode active material layer (12).

### [Cathode Active Material Layer: Conductive Material]

The cathode active material layer (12) may further include a conductive material. The conductive material may be, for example, a carbon-based conductive material, a metal-based conductive material, or a combination thereof. The carbon-based conductive material may be, for example, graphite, carbon black, acetylene black, Ketjen black, carbon fiber, or a combination thereof, but is not limited thereto, and any material used as a carbon-based conductive material in the art may be used. The metal-based conductive material may be metal powder, metal fiber, or a combination thereof, but is not limited thereto, and any material used as a metal-based conductive material in the art may be used. A content of the conductive material included in the cathode active material layer (12) may be, for example, 1 wt% to 30 wt%, 1 wt% to 20 wt%, or 1 wt% to 10 wt% of the total weight of the positive active material layer (12).

### [Cathode active material layer: Binder]

The cathode active material layer (12) may further include a binder. The binder may be, for example, styrene-butadiene rubber (SBR), polytetrafluoroethylene, polyvinylidene fluoride, polyethylene, or the like, but is not limited thereto, and any material used as a binder in the art may be used. A content of the binder included in the cathode active material layer (12) may be, for example, 1 wt% to 10 wt% based on the total weight of the cathode active material layer (12). The binder may be omitted.

### [Cathode Active Material Layer: Other Additives]

The cathode active material layer (12) may further include additives such as a filler, a coating agent, a dispersant, and an ion-conductive assistant, in addition to the above-mentioned cathode active material, solid electrolyte, binder, and conductive material.

As the filler, the coating agent, the dispersant, the ion-conductive assistant, and the like that may be included in the cathode active material layer (12), known materials generally used for an electrode of an all-solid-state secondary battery may be used.

### [Cathode Layer: Cathode Current Collector]

The cathode current collector (11) uses, for example, a plate or a foil composed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive current collector (11) may be omitted. A thickness of the cathode current collector (11) is, for example, 1 µm to 100 µm, 1 µm to 50 µm, 5 µm to 25 µm, or 10 µm to 20 µm.

The cathode current collector (11) may include, for example, a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes the insulating thermoplastic polymer, the base film softens or liquefies when a short circuit occurs, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse and is cut during an overcurrent, thereby performing a short-circuit prevention function. A limit current and a maximum current may be adjusted by controlling a thickness of the metal layer. The metal layer may be plated or deposited on the base film. As the thickness of the metal layer decreases, the limit current and/or the maximum current of the cathode current collector (11) decrease, and thus the stability of the lithium battery during a short circuit may be improved. A lead tab may be added on the metal layer for connection to the outside. The lead tab may be welded to the metal layer or a metal layer/base film laminate by ultrasonic welding, laser welding, spot welding, or the like. During welding, the metal layer may be electrically connected to the lead tab as the base film and/or the metal layer melts. In order to make the welding between the metal layer and the lead tab more robust, a metal chip may be added between the metal layer and the lead tab. The metal chip may be a thin piece of the same material as the metal of the metal layer. The metal chip may be, for example, a metal foil, a metal mesh, or the like. The metal chip may be, for example, an aluminum foil, a copper foil, an SUS foil, or the like. The lead tab may be welded to a metal chip/metal layer laminate or a metal chip/metal layer/base film laminate by disposing a metal chip on the metal layer and then welding it with the lead tab. During welding, the base film, the metal layer, and/or the metal chip melt, so that the metal layer or the metal layer/metal chip laminate may be electrically connected to the lead tab. A metal chip and/or a lead tab may be added to a part of the metal layer. A thickness of the base film may be, for example, 1 µm to 50 µm, 1.5 µm to 50 µm, 1.5 µm to 40 µm, or 1 µm to 30 µm. When the base film has a thickness within this range, the weight of the electrode assembly may be more effectively reduced. A melting point of the base film may be, for example, 100 °C to 300 °C, 100 °C to 250 °C, or 100 °C to 200 °C. When the base film has a melting point within this range, the base film melts during a process of welding the lead tab and may be easily bonded to the lead tab. In order to improve adhesion between the base film and the metal layer, a surface treatment such as corona treatment may be performed on the base film. A thickness of the metal layer may be, for example, 0.01 µm to 3 µm, 0.1 µm to 3 µm, 0.1 µm to 2 µm, or 0.1 µm to 1 µm. When the metal layer has a thickness within this range, the stability of the electrode assembly may be secured while maintaining conductivity. A thickness of the metal chip may be, for example, 2 µm to 10 µm, 2 µm to 7 µm, or 4 µm to 6 µm. When the metal chip has a thickness within this range, connection between the metal layer and the lead tab may be more easily performed. Since the cathode current collector (11) has such a structure, the weight of the cathode may be reduced, and as a result, the energy density of the cathode and the all-solid-state secondary battery may be improved.

### [Cathode Layer: First Inactive Member]

Referring to FIGS. 4 to 5 and FIGS. 8 to 12, the all-solid-state secondary battery (1) may further include a first inactive member (40, 40a, 40b) disposed on one or more of the other surface of the anode current collector (21) and the other surface of the cathode current collector (11).

For more specific details on the first inactive member (40, 40a, 40b), refer to the first inactive member (40, 40a, 40b) of the anode layer described above.

### [Cathode Layer: Second Inactive Member]

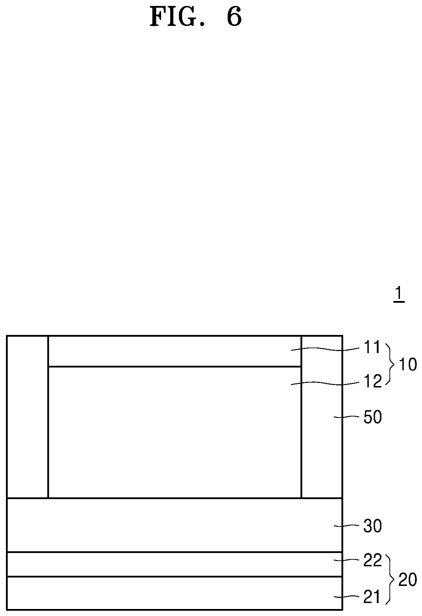

Referring to FIGS. 6 to 12, the cathode layer (10) includes a cathode current collector (11) and a cathode active material layer (12) disposed on one surface of the cathode current collector (11). A second inactive member (50) is disposed on one side surface of the cathode layer (10).

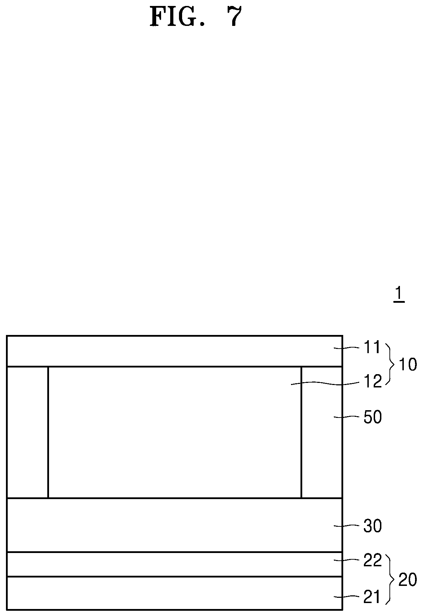

Referring to FIGS. 7, 9, and 11, the second inactive member (50) is disposed on one side surface of the cathode active material layer (12) and is disposed between the solid electrolyte layer (30) and the cathode current collector (11) facing the solid electrolyte layer (30). The second inactive member (50) is not disposed on one side surface of the cathode current collector (11). Referring to FIGS. 6, 8, 10, and 12, the second inactive member (50) is disposed on one side surface of the cathode active material layer (12) and the cathode current collector (11). By including the second inactive member (50), cracking of the solid electrolyte layer (30) is prevented during manufacture and/or charging and discharging of the all-solid-state secondary battery (1), and as a result, cycle characteristics of the all-solid-state secondary battery (1) are improved. In an all-solid-state secondary battery (1) not including the second inactive member (50), cracks occur in the solid electrolyte layer (30) due to non-uniform pressure applied to the solid electrolyte layer (30) contacting the cathode layer (10) during manufacture and/or charging and discharging of the all-solid-state secondary battery (1), and a possibility of a short circuit increases due to the growth of lithium metal through the cracks.

Referring to FIGS. 6 to 12, in the all-solid-state secondary battery (1), a thickness of the second inactive member (50) is, for example, greater than a thickness of the first anode active material layer (22). The thickness of the second inactive member (50) is, for example, greater than a thickness of the solid electrolyte layer (30).

Referring to FIGS. 6 to 12, the second inactive member (50) surrounds a side surface of the cathode layer (10) and contacts the solid electrolyte layer (30). Since the second inactive member (50) surrounds the side surface of the cathode layer (10) and contacts the solid electrolyte layer (30), cracks in the solid electrolyte layer (30) caused by a pressure difference during a pressing process in the solid electrolyte layer (30) not contacting the cathode layer (10) may be effectively suppressed. The second inactive member (50) surrounds the side surface of the cathode layer (10) and is separated from the anode layer (20), more specifically, the first anode active material layer (22). The second inactive member (50) surrounds the side surface of the cathode layer (10), contacts the solid electrolyte layer (30), and is separated from the anode layer (20). Accordingly, a possibility of a short circuit caused by physical contact between the cathode layer (10) and the first anode active material layer (22) or a short circuit caused by overcharging of lithium is suppressed. Since the second inactive member (50) is simultaneously disposed on one side surface of the cathode active material layer (12) and the cathode current collector (11), the possibility of a short circuit due to contact between the cathode current collector (11) and the anode layer (20) is more effectively suppressed.

Referring to FIGS. 6 to 12, the second inactive member (50) extends from one side surface of the cathode layer (10) to a distal end of the solid electrolyte layer (30). Since the second inactive member (50) extends to the distal end of the solid electrolyte layer (30), cracks occurring at the distal end of the solid electrolyte layer (30) may be suppressed. The distal end of the solid electrolyte layer (30) is an outermost portion in contact with a side surface of the solid electrolyte layer (30). The second inert member (50) extends to the outermost portion in contact with the side of the solid electrolyte layer (30). The second inactive member (50) is separated from the anode layer (20), more specifically, the first anode active material layer (22). The second inert member (50) extends to the end portion of the solid electrolyte layer (30) but does not come into contact with the cathode layer (20). The second inactive member (50) fills, for example, a space extending from one side surface of the cathode layer (10) to the distal end of the solid electrolyte layer (30).

An area of the cathode active material layer (12) or the cathode layer (10) may be smaller than an area of the first anode active material layer (22) or the anode layer (20). The area of the cathode active material layer (12) or the cathode layer (10) may be smaller than an area of the solid electrolyte layer (30).

The second inactive member (50) may be, for example, a gasket. By using a gasket as the second inactive member (50), cracks in the solid electrolyte layer (30) caused by a pressure difference during a pressing process may be effectively suppressed.

The second inactive member (50) has, for example, a single-layer structure. Alternatively, although not shown in the drawings, the second inactive member (50) may have a multi-layer structure. The multi-layer structure may have, for example, a two-layer, three-layer, or four-layer structure, and by having the multi-layer structure, physical properties of the second inactive member (50) may be more precisely controlled.

Although not shown in the drawings, a part or all of the second inactive member (50) may be spaced apart from the side surface of the cathode active material layer (12). Since a part or all of the second inactive member (50) is spaced apart from the side surface of the cathode active material layer (12), a manufacturing process of the all-solid-state secondary battery (1) becomes easier, and a manufacturing speed of the all-solid-state secondary battery (1) may increase. Since a part or all of the second inactive member (50) is spaced apart from the side surface of the cathode active material layer (12), a volume change of the cathode active material layer (12) in a side direction during charging and discharging is more effectively accommodated, and thus lifespan characteristics of the all-solid-state secondary battery (1) may be further improved. A distance between the side surface of the second inactive member (50) and the side surface of the cathode active material layer (12) is, independently of each other, for example, 0.1 µm to 10 mm, 1 µm to 1 mm, 1 µm to 500 µm, 1 µm to 100 µm, 1 µm to 50 µm, or 1 µm to 10 µm.

Referring to FIGS. 6 to 12, the second inactive member (50) may, for example, be selected from the materials used for the first inactive member (40, 40a, 40b) described above. The second inactive member (50), for example, does not include an electrode active material. The second inactive member (50) may be, for example, a flame-retardant inactive member, an electronically insulating inactive member, an ionically insulating inactive member, or an elastic inactive member.

### [Solid Electrolyte Layer]

### [Solid Electrolyte Layer: Solid Electrolyte]

Referring to FIGS. 1 to 12, the all-solid-state secondary battery (1) includes a solid electrolyte layer (30) disposed between the cathode layer (10) and the anode layer (20). The solid electrolyte layer (30) includes, for example, a solid electrolyte, or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte is, for example, one or more selected from, Li₂S-P₂S₅, Li₂S-P₂S₅-LiX, where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, where m and n are positive numbers, Z is one of Ge, Zn, or Ga, Li₂S-GeS₂, Li₂S-SiS₂-Li₃PO₄, Li₂S-SiS₂-LiₚMO_{q}, where p and q are positive numbers, and M is one of P, Si, Ge, B, Al, Ga, or In, Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte is prepared, for example, by treating starting materials such as Li₂S and P₂S₅ by a melt quenching method, a mechanical milling method, or the like. In addition, after such treatment, heat treatment may be performed. The solid electrolyte may be amorphous, crystalline, or in a mixed state thereof. Further, the solid electrolyte may be one including at least sulfur (S), phosphorus (P), and lithium (Li) as constituent elements among the above-mentioned sulfide-based solid electrolyte materials. For example, the solid electrolyte may be a material including Li₂S-P₂S₅. When using a material including Li₂S-P₂S₅ as the sulfide-based solid electrolyte material forming the solid electrolyte, a mixing molar ratio of Li₂S to P₂S₅ is in a range of, for example, Li₂S : P₂S₅ = 20 : 80 to 90 : 10, 25 : 75 to 90 : 10, 30 : 70 to 70 : 30, or 40 : 60 to 60 : 40.

The sulfide-based solid electrolyte may include, for example, an Argyrodite-type solid electrolyte represented by the following Formula 1:

Formula 1 Li⁺₁₂₋ₙ₋ₓAⁿ⁺X²⁻₆₋ₓY⁻ₓ

In Formula 1, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be an argyrodite-type compound comprising, for example, one or more selected from Li7-xPS6-xClx, 0≤x≤2, Li7-xPS6-xBrx, 0≤x≤2, and Li7-xPS6-xIx, 0≤x≤2. The sulfide-based solid electrolyte may be, for example, an Argyrodite-type compound including one or more selected from Li₆PS₅Cl, Li₆PS₅Br, and Li₆PS₅I.

A density of the Argyrodite-type solid electrolyte may be 1.5 g/cc to 2.0 g/cc. Since the Argyrodite-type solid electrolyte has a density of 1.5 g/cc or more, the internal resistance of the all-solid-state secondary battery decreases, and penetration of the solid electrolyte layer by Li may be effectively suppressed.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y} Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like.

The oxide-based solid electrolyte is, for example, a Garnet-type solid electrolyte selected from Li₇La₃Zr₂O₁₂(LLZO) and Li₃₊ₓLa₃Zr₂₋ₐMₐO₁₂(M doped LLZO, M=Ga, W, Nb, Ta, or Al, 0<a<2, and 0≤x≤10).

The polymer solid electrolyte may include, for example, a mixture of a lithium salt and a polymer, or a polymer having an ion-conductive functional group. The polymer solid electrolyte may be, for example, a polymer electrolyte in a solid state at 25 °C and 1 atm. The polymer solid electrolyte may, for example, not include a liquid. The polymer solid electrolyte includes a polymer, and the polymer may be, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methyl methacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), or a combination thereof, but is not limited thereto, and any polymer used for a polymer electrolyte in the art may be used. As the lithium salt, any lithium salt that may be used as a lithium salt in the art may be used. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(x and y are each 1 to 20), LiCl, LiI, or a mixture thereof. A polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton or more, 10,000 Dalton or more, 100,000 Dalton or more, or 1,000,000 Dalton or more.

A gel electrolyte is, for example, a polymer gel electrolyte. The gel electrolyte may, for example, have a gel state without including a polymer.

The polymer gel electrolyte may include, for example, a liquid electrolyte and a polymer, or may include an organic solvent and a polymer having an ion-conductive functional group. The polymer gel electrolyte may be, for example, a polymer electrolyte in a gel state at 25 °C and 1 atm. The polymer gel electrolyte may, for example, have a gel state without including a liquid. The liquid electrolyte used in the polymer gel electrolyte may be, for example, an ionic liquid, a mixture of a lithium salt and an organic solvent; a mixture of a lithium salt and an organic solvent; a mixture of an ionic liquid and an organic solvent; or a mixture of a lithium salt, an ionic liquid, and an organic solvent. The polymer used in the polymer gel electrolyte may be selected from polymers used in a solid polymer electrolyte. The organic solvent may be selected from organic solvents used in a liquid electrolyte. Organic solvents include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, diethylene glycol, dimethyl ether, or a mixture thereof. The lithium salt may be selected from lithium salts used in a polymer solid electrolyte. The ionic liquid refers to a salt in a liquid state at room temperature or a room-temperature molten salt that has a melting point at or below room temperature and is composed only of ions. The ionic liquid may include, for example, one or more selected from: a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and mixtures thereof; and b) one or more types of anions selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. The polymer solid electrolyte may, for example, form a polymer gel electrolyte by being impregnated with a liquid electrolyte in a secondary battery. The polymer gel electrolyte may further include inorganic particles. A polymer included in the polymer gel electrolyte may be, for example, a compound including 10 or more, 20 or more, 50 or more, or 100 or more repeating units. A weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Solid Electrolyte Layer: Binder]

The solid electrolyte layer (30) may, for example, include a binder. The binder included in the solid electrolyte layer (30) is, for example, styrene-butadiene rubber (SBR), polytetrafluoroethylene, polyvinylidene fluoride, polyethylene, or the like, but is not limited thereto, and any material used as a binder in the art may be used. The binder of the solid electrolyte layer (30) may be the same as or different from a binder included in the cathode active material layer (12) and the anode active material layer (22). The binder may be omitted.

A content of the binder included in the solid electrolyte layer (30) is 0.1 wt% to 10 wt%, 0.1 wt% to 5 wt%, 0.1 wt% to 3 wt%, 0.1 wt% to 1 wt%, 0 wt% to 0.5 wt%, or 0 wt% to 0.1 wt% based on the total weight of the solid electrolyte layer (30).

### Mode for Invention

The inventive concept will be described in more detail through the following examples and comparative examples. However, the examples are for illustrating the present inventive concept, and the scope of the present inventive concept is not limited thereto.

### (Preparation of Sulfide-based Composite Cathode Active Material)

### Preparation Example 1: Li₂S-LiI-CNF composite cathode active material

Li₂S and LiI were mixed at a weight ratio of 30:20. The mixture was mechanically milled using a ball mill to prepare a Li₂S-LiI composite. Milling conditions were 25 °C and 510 rpm for 10 hours.

The Li₂S-LiI composite and carbon nanofiber (CNF) were mixed at a weight ratio of 50:10. The mixture was mechanically milled using a ball mill to prepare a Li₂S-LiI-CNF composite. Milling conditions were 25 °C and 510 rpm for 10 hours. Li₂S-LiI-CNF composite was used as a composite cathode active material.

### (Preparation of All-Solid-State Secondary Battery)

### Example 1: Elastic Sheet (25 µm)/Cathode Layer (112 µm, NCA)/Solid Electrolyte Layer (30 µm)/Anode Layer (37 µm, Si alloy particles: CNT=9:1+binder): (Si alloy-CNT:Ag-C = 2:2 weight ratio)

### (Preparation of Cathode Layer)

LiNi₀.₈Co₀.₁₅Al₀.₀₅O₂ (NCA) coated with Li₂O-ZrO₂ (LZO) was prepared as a cathode active material. The LZO-coated cathode active material was prepared according to the method disclosed in Korean Patent Publication No. 10-2016-0064942. Li₆PS₅Cl, which is an Argyrodite-type crystal (D50 = 0.5 µm, crystalline), was prepared as a solid electrolyte. A polytetrafluoroethylene (PTFE) binder was prepared as a binder. Carbon nanofibers (CNF) were prepared as a conductive material. A slurry obtained by mixing these materials with a xylene solvent at a weight ratio of cathode active material: solid electrolyte: conductive material: binder = 84:11:3:2 was formed into a sheet shape and then vacuum-dried at 40 °C for 8 hours to prepare a cathode sheet. The prepared cathode sheet was disposed on a carbon layer of a cathode current collector composed of an aluminum foil coated with a carbon layer on one surface, and a heated roll press was performed at 85 °C to prepare a cathode layer. A total thickness of the cathode layer was about 112 µm. thickness of the cathode active material layer was 92 µm, a thickness of the carbon-coated aluminum foil was about 20 µm.

An initial charging capacity of the cathode layer was measured by the above-described half-cell. By the half-cell, an initial charging capacity of the cathode active material layer was measured.

### (Preparation of Anode Layer)

An SUS foil having a thickness of 10 µm was prepared as an anode current collector. As a first anode active material, silicon-iron-copper alloy (Si₇₅Fe_{9.}5Cu_{9.}5Al₆) particles (MK Electron Co., Ltd.) having a D50 particle diameter of 4 µm were prepared. The silicon-iron-copper-aluminum (Si-Fe-Cu-Al) alloy particles included a silicon single phase, a silicon-iron alloy phase, a silicon-copper alloy phase, and the like. In the silicon-iron-copper-aluminum (Si-Fe-Cu-Al) alloy particles, the silicon single phase had a structure surrounded by the silicon-iron alloy phase, the silicon-copper alloy phase, and the like.

As a second anode active material, a 3:1 weight ratio mixture of carbon black (CB) having a primary particle diameter of about 30 nm and silver (Ag) particles having an average particle diameter of about 60 nm was prepared. Carbon nanotubes were prepared as a fibrous carbon-based material. The carbon nanotubes included a carbon nanotube primary structure and a carbon nanotube secondary structure. The carbon nanotube primary structure consists of a single carbon nanotube unit. A length of the carbon nanotube unit was 200 nm to 300 nm, and a diameter of the carbon nanotube unit was about 5 nm to about 10 nm. The carbon nanotube secondary structure was formed by aggregating a plurality of carbon nanotube units. A length of the carbon nanotube secondary structure was about 5 µm, and a diameter was about 40 nm.

A mixture solution was prepared by putting 2 g of a 9:1 weight ratio mixture of the silicon-iron-copper-aluminum (Si-Fe-Cu-Al) particles and the carbon nanotubes and 2 g of the 3:1 weight ratio mixture of carbon black (CB) and silver (Ag) into a container, and then adding 4 g of an NMP solution containing 7 wt% of a PVDF binder (#9300, Kureha Co.) thereto. A slurry was prepared by stirring the mixture solution while gradually adding NMP to the prepared mixture solution. The prepared slurry was applied to a SUS substrate using a bar coater, dried in air at 80°C for 10 minutes, and then vacuum dried at 40 °C for 10 hours to prepare a laminate. The prepared laminate was cold roll pressed to flatten the surface, thereby preparing an anode having a first anode active material layer/anode current collector structure. A thickness of the first anode active material layer was about 27 µm.

An initial charging capacity of the anode was measured by the above-described half-cell. By the half-cell, an initial charging capacity of the first anode active material layer was measured.

A ratio (B/A) of the initial charging capacity (B) of the first anode active material layer to the initial charging capacity (A) of the cathode active material layer was less than 0.5. The initial charge capacity of the positive active material layer was determined from the first open circuit voltage to a charge of 4.25 V vs. Li/Li+. An initial charging capacity of the first anode active material layer was determined in charging from a second open circuit voltage to 0.01 V vs. Li/Li+. The initial charging capacities of the cathode layer (i.e., cathode active material layer) and the anode layer (i.e., first anode active material layer) were respectively measured by the above-described half-cell. In Examples 2 to 3 and Reference Example 1, a ratio (B/A) of the initial charging capacity (B) of the first anode active material layer to the initial charging capacity (A) of the cathode active material layer, measured under the same conditions as in Example 1, was less than 0.5, respectively.

### (Preparation of Solid Electrolyte Layer)

A mixture was prepared by adding 1.5 parts by weight of an acrylic binder to 98.5 parts by weight of the solid electrolyte to an Argyrodite type crystal Li₆PS₅Cl solid electrolyte (D₅₀=3.0 µm, crystalline). A slurry was prepared by stirring while adding octyl acetate to the prepared mixture. The prepared slurry was coated on a non-woven fabric placed on a PET substrate using a bar coater, and dried in air at a temperature of 80 °C for 10 minutes to prepare a laminate. he prepared laminate was vacuum-dried at 80 °C for 2 hours to prepare a solid electrolyte layer.

### (Inactive Member: Elastic Sheet)

A porous polyurethane foam sheet having a thickness of 25 µm was prepared as an elastic sheet.

### (Preparation of All-Solid-State Secondary Battery)

A laminate was prepared by disposing the solid electrolyte layer on the anode such that the first anode active material layer contacted the solid electrolyte layer, and disposing the cathode on the solid electrolyte layer such that the cathode active material layer contacted the solid electrolyte layer.

The prepared laminate was subjected to a plate press treatment at 85 °C under pressure of 500 MPa for 30 minutes. By such a pressing treatment, the solid electrolyte layer is sintered, and battery characteristics are improved. A thickness of the sintered solid electrolyte layer was about 30 µm. A density of the Argyrodite-type crystalline Li6PS5Cl solid electrolyte included in the sintered solid electrolyte layer was 1.6 g/cc. An area of the solid electrolyte layer was the same as an area of the anode. An elastic sheet was further disposed on the cathode current collector of the pressed laminate.

An all-solid-state secondary battery was prepared by placing the laminate further including the elastic sheet in a pouch and vacuum-sealing the pouch. Parts of the cathode current collector and the anode current collector were extended to the outside of the sealed battery to be used as a cathode terminal and an anode terminal, respectively.

### Example 2: Elastic Sheet (25 µm)/Cathode Layer (112 µm, NCA)/Solid Electrolyte Layer (30 µm)/Anode Layer (37 µm, Lithiated Si alloy particles: CNT=9:1+binder): (Lithiated Si alloy-CNT:Ag-C = 2:2 weight ratio)

An all-solid-state secondary battery was manufactured in the same manner as in Example 1, except that lithiated silicon-iron-copper-aluminum (Si-Fe-Cu-Al) alloy particles (MK Electron Co., Ltd.) were used instead of the silicon-iron-copper-(Si-Fe-Cu-Al) alloy particles (MK Electron Co., Ltd.).

### Example 3: Elastic Sheet (25 µm)/Cathode Layer (112 µm, NCA)/Solid electrolyte layer (30 µm)/Anode Layer (37 µm, Si alloy particles: CNT=9:1+binder): (Si alloy-CNT:Ag supported carbon = 2:2 weight ratio)

An all-solid-state secondary battery was prepared in the same manner as in Example 1, except that 2 g of the following silver particle-supported carbon black was used instead of 2 g of the 3:1 weight ratio mixture of carbon black and silver particles as the second anode active material.

### (Preparation of Silver Particle-Supported Carbon Black)

Carbon black was dispersed in a 1.0 M sulfuric acid solution and stirred for 2 hours, and then filtered and dried to prepare acid-treated carbon black.

10 g of acid-treated carbon black was added to a mixed solvent of 1500 g of distilled water, 1500 g of ethanol, and 30 g of glycerol and stirred, and then 2 g of AgNO₃ was added and stirred to prepare a mixed solution. A particle diameter of the carbon black was 80 nm. A reducing agent was added to the mixed solution to reduce and support silver ions on the carbon black. The carbon black on which silver-containing particles were supported was filtered, washed, and dried to prepare a composite anode active material. As a result of scanning electron microscopy and XPS measurement, it was confirmed that a plurality of silver-containing particles were supported on the carbon black particles. The silver-containing particles were silver particles, silver oxide (Ag₂O) particles, and composite particles of silver (Ag) and silver oxide (Ag₂O). A content of the silver-containing particles included in the composite anode active material (silver-containing particle-supported carbon black) was 5 wt%. An average particle diameter of the silver particles was 10 nm.

### Reference Example 1: Elastic Sheet (100 µm)/Cathode Layer (112 µm, NCA)/Solid electrolyte layer (30 µm)/Anode Layer (17 µm, Ag-C+binder) : (Si alloy-CNT:Ag-C = 0:4 weight ratio)

An all-solid-state secondary battery was prepared in the same manner as in Example 1, except that a mixture of silicon (Si)-iron (Fe)-copper (Cu) alloy particles and carbon nanotubes at a weight ratio of 9:1 was not used, 4 g of a mixture of carbon black (CB) and silver (Ag) at a weight ratio of 3:1 was used, a thickness of the anode active material layer was changed to 7 µm, and a thickness of the elastic sheet was changed to 100 µm. The thickness of the anode layer is the total thickness of the anode current collector and the anode active material layer.

### Example 4: Cathode Layer (113.8 µm, Li₂S-LiI-CNF)/solid Electrolyte Layer (30 µm)/Anode Layer (37 µm, Si alloy particles:CNT=9:1+binder) : (Si alloy-CNT:Ag-C = 2:2 weight ratio)

An all-solid-state secondary battery was manufactured in the same manner as in Example 1, except that the following cathode including a sulfide-based cathode active material was used and the elastic sheet was omitted.

### (Preparation of Cathode)

The Li₂S-LiI-CNF composite prepared in Preparation Example 1 was prepared as a cathode active material. Li₆PS₅Cl, which is an Argyrodite-type crystal (D50=3.0 µm, crystalline), was prepared as a solid electrolyte. PTFE was prepared as a binder. A cathode composite was prepared by mixing these materials in a weight ratio of composite cathode active material: solid electrolyte: binder = 60: 40: 1.2. The cathode composite was obtained by mixing using a ball mill.

The cathode composite was disposed on one surface of a cathode current collector composed of an aluminum foil coated with carbon on one surface, and a plate press was performed at a pressure of 200 MPa for 10 minutes to prepare a cathode. A total thickness of the cathode layer was approximately about 113.8 µm. A thickness of the cathode active material layer was about 93.8 µm, and a thickness of the carbon-coated aluminum foil was about 20 µm.

An initial charging capacity of the cathode layer was measured by the above-described half-cell. By the half-cell, an initial charging capacity of the cathode active material layer was measured. An initial charging capacity of the anode was measured in the same manner as in Example 1.

A ratio (B/A) of the initial charge capacity (B) of the first negative active material layer to an initial charge capacity (A) of the cathode active material layer was less than 0.5. The initial charging capacity of the cathode active material layer was determined in charging from a first open circuit voltage to 2.8 V vs. Li/Li+. Initial charging capacities of the cathode layer (i.e., cathode active material layer) and the anode layer (i.e., first anode active material layer) were respectively measured by the above-described half-cell.

### Example 5: Cathode Layer (113.8 µm, Li₂S-LiI-CNF)/Solid Electrolyte Layer (30 µm)/Anode Layer (37 µm, lithiated Si alloy particles:CNT=9:1+binder) : (lithiated Si alloy-CNT:Ag-C = 2:2 weight ratio)

An all-solid-state secondary battery was prepared in the same manner as in Example 4, except that lithiated silicon-iron-copper-aluminum (Si-Fe-Cu-Al) particles (MK Electron Co., Ltd.) were used instead of the silicon-iron-copper-aluminum (Si-Fe-Cu-Al) particles (MK Electron Co., Ltd.). An elastic sheet was omitted.

### Reference Example 2: Elastic Sheet (50 µm)/Cathode Layer (113.8 µm, Li₂S-LiI-CNF)/Solid electrolyte layer (30 µm)/Cathode layer (17 µm, Ag-C+binder) : (Si alloy-CNT:Ag-C = 0:4 weight ratio)

An all-solid-state secondary battery was prepared in the same manner as in Example 1, except that the cathode of Example 4 was used, a mixture of silicon-iron-copper-aluminum (Si-Fe-Cu-Al) alloy particles and carbon nanotubes at a weight ratio of 9:1 was not used, 4 g of a mixture of carbon black (CB) and silver (Ag) at a weight ratio of 3:1 was used, a thickness of the anode active material layer was changed to 7 µm, and a thickness of the elastic sheet was changed to 50 µm. The thickness of the anode layer is the total thickness of the anode current collector and the anode active material layer.

### Evaluation Example 1-1: Evaluation of Volume Change during Charging and Discharging (NCA Cathode Active Material)

For the all-solid-state secondary batteries manufactured in Examples 1 to 2 and Reference Example 1, only a charging step of a first cycle was performed in a charging and discharging experiment of Evaluation Example 2 below, and then a thickness change was observed by measuring a scanning electron microscope image of a cross-section of each all-solid-state secondary battery.

After the first cycle charging, a lithium metal layer was formed between the first anode active material layer and the anode current collector.

In the all-solid-state secondary battery of Example 1, the thickness of the lithium metal layer formed between the first anode active material layer and the negative electrode current collector after initial charging was 8 µm, which was smaller than the thickness of the first anode active material layer after charging, which was 30 µm.

In the all-solid-state secondary battery of Example 2, a thickness of the lithium metal layer formed between the first anode active material layer and the anode current collector after initial charging was 9 µm, which was smaller than a thickness of 28 µm of the first anode active material layer after charging.

A thickness increase after initial charging of the all-solid-state secondary batteries of Examples 1 and 2, excluding the elastic member, was 10 % or less of an initial thickness of the all-solid-state secondary battery. As a result, volume change was suppressed during the charging and discharging process of the all-solid-state secondary batteries of Examples 1 and 2.

An elastic member with a thickness of 25 µm was used to accommodate volume changes during charging and discharging in the all-solid-state secondary battery of Example 1. As a result, the energy density of the all-solid-state secondary battery was partially lowered by including the elastic member having the thickness of 25 µm.

In the all-solid-state secondary battery of Reference Example 1, a thickness of the lithium metal layer formed between the first anode active material layer and the anode current collector after initial charging was 30 µm, which was greater than a thickness of 7 µm of the first anode active material layer after charging.

A thickness increase after initial charging of the all-solid-state secondary battery of Reference Example 1, excluding the elastic member, was more than 15 % of the initial thickness of the all-solid-state secondary battery. As a result, the volume change was significant during the charging and discharging process of the all-solid-state secondary battery of Reference Example 1.

In the all-solid-state secondary battery of Reference Example 1, an elastic member having a thickness of 100 µm was used to accommodate the volume change during charging and discharging. As a result, the energy density of the all-solid-state secondary battery was further lowered by including the elastic member having the thickness of 100 µm.

### Evaluation Example 1-2: Evaluation of Volume Change during Charging and Discharging (Lᵢ₂S-LiI-CNF Cathode Active Material)

For the all-solid-state secondary batteries manufactured in Examples 4 to 5 and Reference Example 2, only a charging step of a first cycle was performed in a charging and discharging experiment of Evaluation Example 2 below, and then a thickness change was observed by measuring a scanning electron microscope image of a cross-section of each all-solid-state secondary battery.

After the first cycle charging, a lithium metal layer was formed between the first anode active material layer and the anode current collector.

In the all-solid-state secondary battery of Example 4, a thickness of the lithium metal layer formed between the first anode active material layer and the anode current collector after initial charging was 8 µm, which was smaller than a thickness of 30 µm of the first anode active material layer after charging.

In the all-solid-state secondary battery of Example 5, a thickness of the lithium metal layer formed between the first anode active material layer and the anode current collector after initial charging was 9 µm, which was smaller than a thickness of 28 µm of the first anode active material layer after charging.

A thickness increase after initial charging of the all-solid-state secondary batteries of Examples 4 and 5 was 7 % or less of an initial thickness of the all-solid-state secondary battery. As a result, volume change was insignificant during the charging and discharging process of the all-solid-state secondary batteries of Examples 4 and 5.

In the all-solid-state secondary batteries of Examples 4 and 5, an elastic member for accommodating the volume change during charging and discharging was not used. As a result, there was no decrease in energy density of the all-solid-state secondary battery caused by an elastic member.

In the manufactured all-solid-state secondary battery of Reference Example 2, a thickness of the lithium metal layer formed between the first anode active material layer and the anode current collector after initial charging was 30 µm, which was greater than a thickness of 7 µm of the first anode active material layer.

A thickness increase after initial charging of the all-solid-state secondary battery of Reference Example 2, excluding the elastic member, was more than 10 % of the initial thickness of the all-solid-state secondary battery. As a result, the volume change was significant during the charging and discharging process of the all-solid-state secondary battery of Reference Example 2.

In the all-solid-state secondary battery of Reference Example 2, an elastic member having a thickness of 50 µm was used to accommodate the increased volume change during charging and discharging. As a result, the energy density of the all-solid-state secondary battery was partially lowered by including the elastic member having the thickness of 50 µm.

### Evaluation Example 2: Charge/Discharge Test

Charging and discharging characteristics of the all-solid-state secondary batteries manufactured in Examples 1 to 3 and Reference Example 1 were evaluated by the following charging and discharging test. The charging and discharging test was performed by placing each all-solid-state secondary battery in a constant temperature bath at 45 °C.

In a first cycle, charging was performed at a constant current of 0.5 mA/cm2 for 12.5 hours until a battery voltage reached 4.25 V. Subsequently, discharging was performed at a constant current of 0.5 mA/cm2 until the battery voltage reached 2.5 V.

Meanwhile, charging and discharging characteristics of the all-solid-state secondary batteries manufactured in Examples 4 to 5 and Reference Example 2 were evaluated by the following charging and discharging test. The charging and discharging test was performed by placing each all-solid-state secondary battery in a constant temperature bath at 45 °C.

In a first cycle, charging was performed at a constant current of 0.1 C for 12.5 hours until a battery voltage reached 2.8 V. Subsequently, discharging was performed at a constant current of 0.1 C for 12.5 hours until the battery voltage reached 0.3 V.

The discharge capacity of the first cycle was taken as a standard capacity. After the first cycle, charging and discharging were performed up to $850$ cycles under the same conditions as the first cycle. The measurement results are shown in Table 1 below.

The number of cycles refers to the number of cycles required for the discharge capacity to decrease to 80 % of the standard capacity after the first cycle. It was considered that the longer the number of cycles, the better the lifespan characteristics.

The initial efficiency is represented by the following Equation 1. 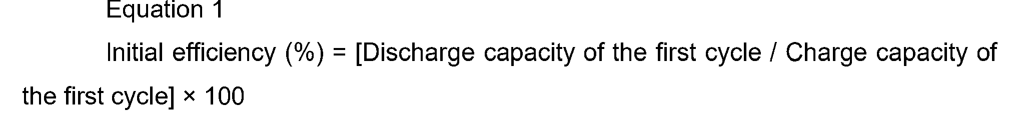 Initial efficiency (%) = [Discharge capacity of the first cycle / Charge capacity of the first cycle] × 100 Equation 1

**[Table 1]**

| | Initial Efficien cy[%] | Number of Cycles [cycles] |
|---|---|---|
| Example 1: Elastic Sheet (25 µm)/Cathode Layer (112 µm, NCA)/Solid Electrolyte Layer (30 µm)/Anode Layer (37 µm, Si alloy particles: CNT=9:1+binder): (Si alloy-CNT:Ag-C = 2:2 weight ratio) | 87 | 560 |
| Example 2: Elastic Sheet (25 µm)/Cathode layer (112 µm, NCA)/Solid electrolyte layer (30 µm)/: Anode layer (37 µm, Lithiated Si alloy particles: CNT=9:1+binder): (Lithiated Si alloy-CNT:Ag-C = 2:2 weight ratio) | 98 | 810 |
| Reference Example 1: Elastic Sheet (100 µm)/Cathode Layer (112 µm, NCA)/Solid Electrolyte Layer (30 µm)/Anode Layer (17 µm, Ag-C + binder): (Si alloy-CNT:Ag-C = 0:4 weight ratio) | 85 | 400 |
| Example 4: Cathode Layer (113.8 µm, Li₂S-LiI-CNF)/Solid Electrolyte Layer (30 µm)/Anode Layer (37 µm, Si alloy particles:CNT=9:1+binder) : (Si alloy-CNT:Ag-C = 2:2 weight ratio) | 84 | 450 |
| Example 5: Cathode Layer (113.8 µm, Li₂S-LiI-CNF)/Solid Electrolyte Layer (30 µm)/Anode Layer (37 µm, lithiated Si alloy particles:CNT=9:1+binder) : (lithiated Si alloy-CNT:Ag-C = 2:2 weight ratio) | 97 | 810 |
| Reference Example 2: Elastic Sheet (50 µm)/Cathode Layer (113.8 µm, Li₂S-LiI-CNF)/Solid Electrolyte Layer (30 µm)/Anode Layer (17 µm, Ag-C+binder) : (Si alloy-CNT:Ag-C = 0:4 weight ratio) | 81 | 300 |

As shown in Table 1, the all-solid-state secondary batteries of Examples 1 and 2 showed excellent initial efficiency and lifespan characteristics because the volume change during charging and discharging was suppressed and the increase in internal resistance was suppressed. Although not shown in Table 1, the all-solid-state secondary battery of Example 3 also exhibited improved initial efficiency and lifespan characteristics compared to the all-solid-state secondary battery of Reference Example 1.

It was judged that the all-solid-state secondary batteries of Examples 1 and 2 had improved initial efficiency and lifespan characteristics compared to the all-solid-state secondary battery of Reference Example 1 by including the first anode active material having an alloy phase.

As shown in Table 1, the all-solid-state secondary batteries of Examples 4 and 5 showed excellent initial efficiency and lifespan characteristics because the volume change during charging and discharging was suppressed and the increase in internal resistance was suppressed.

It was judged that the all-solid-state secondary batteries of Examples 4 and 5 had improved initial efficiency and lifespan characteristics compared to the all-solid-state secondary battery of Reference Example 2 by including the first anode active material having an alloy phase.

### Evaluation Example 3: High Rate Characteristic Evaluation

High-rate characteristics of the all-solid-state secondary batteries of Examples 1 to 3 and Reference Example 1 were evaluated by the following charging and discharging test. The charging and discharging test was performed by placing each all-solid-state secondary battery in a constant temperature bath at 45 °C.

The all-solid-state secondary batteries of Examples 1 to 3 and Reference Example 1 were charged at a constant current of a 0.1 C rate at 45 °C until a voltage reached 3.9 V (vs. Li), and then cut off at a current of 0.05 C rate while maintaining 3.9 V in a constant voltage mode. Subsequently, during discharging, the batteries were discharged at a constant current of a 0.1 C rate until the voltage reached 2.5 V (vs. Li) (formation cycle).

The all-solid-state secondary battery that had undergone the formation cycle was charged at a constant current at a 0.2 C rate at 45 °C until the voltage reached 3.9 V (vs. Li). Subsequently, during discharging, the battery was discharged at a constant current of a 0.2 C rate until the voltage reached 2.5 V (vs. Li) (First Cycle).

The all-solid-state secondary battery that had undergone the first cycle was charged at a constant current at a 0.2 C rate at 45 °C until the voltage reached 3.9 V (vs. Li). Subsequently, during discharging, the battery was discharged at a constant current of a 0.33 C rate until the voltage reached 2.5 V (vs. Li) (Second Cycle).

The all-solid-state secondary battery that had undergone the second cycle was charged at a constant current at a 0.2 C rate at 45 °C until the voltage reached 3.9 V (vs. Li). Subsequently, during discharging, the battery was discharged at a constant current of a 0.5 C rate until the voltage reached 2.5 V (vs. Li) (Third Cycle).

The all-solid-state secondary battery that had undergone the third cycle was charged at a constant current at a 0.2 C rate at 45 °C until the voltage reached 3.9 V (vs. Li). Subsequently, during discharging, the battery was discharged at a constant current of a 1.0 C rate until the voltage reached 2.5 V (vs. Li) (Fourth Cycle).

In all charging and discharging cycles, a rest time of 10 minutes was provided after one charging/discharging cycle. A part of the room-temperature charging and discharging experiment results is shown in Table 2 below. High-rate characteristics are defined by Equation 1 below.

Meanwhile, high-rate characteristics of the all-solid-state secondary batteries of Examples 4 to 5 and Reference Example 2 were evaluated by the following charging and discharging test. The charging and discharging test was performed by placing each all-solid-state secondary battery in a constant temperature bath at 45 °C.

The all-solid-state secondary batteries of Examples 4 to 5 and Reference Example 2 were charged at a constant current at a 0.1 C rate at 45 °C until the voltage reached 2.5 V (vs. Li), and then cut off at a current of a 0.05 C rate while maintaining 2.5 V in a constant voltage mode. Subsequently, during discharging, the batteries were discharged at a constant current of a 0.1 C rate until the voltage reached 0.3 V (vs. Li) (formation cycle).

The all-solid-state secondary battery that had undergone the formation cycle was charged at a constant current at a 0.2 C rate at 45 °C until the voltage reached 2.5 V (vs. Li). Subsequently, during discharging, the battery was discharged at a constant current of a 0.2 C rate until the voltage reached 0.3 V (vs. Li) (First Cycle).

The all-solid-state secondary battery that had undergone the first cycle was charged at a constant current at a 0.2 C rate at 45 °C until the voltage reached 2.5 V (vs. Li). Subsequently, during discharging, the battery was discharged at a constant current of a 0.33 C rate until the voltage reached 0.3 V (vs. Li) (Second Cycle).

The all-solid-state secondary battery that had undergone the second cycle was charged at a constant current at a 0.2 C rate at 45 °C until the voltage reached 2.5 V (vs. Li). Subsequently, during discharging, the battery was discharged at a constant current of a 0.5 C rate until the voltage reached 0.3 V (vs. Li) (Third Cycle).

The all-solid-state secondary battery that had undergone the third cycle was charged at a constant current at a 0.2 C rate at 45 °C until the voltage reached 2.5 V (vs. Li). Subsequently, during discharging, the battery was discharged at a constant current of a 1.0 C rate until the voltage reached 0.3 V (vs. Li) (Fourth Cycle).

In all charging and discharging cycles, a rest time of 10 minutes was provided after one charging/discharging cycle. A part of the room-temperature charging and discharging experiment results is shown in Table 2 below. High-rate characteristics are defined by Equation 2 below. 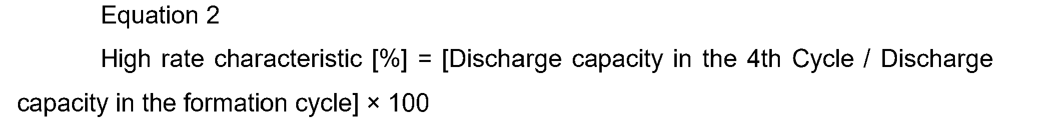 High rate characteristic [%] = [Discharge capacity in the 4th Cycle / Discharge capacity in the formation cycle] × 100 Equation 2

**[Table 2]**

| | High Rate Characteristics (1C/0.1C) [%] |
|---|---|
| Example 1: Elastic Sheet (25 µm)/Cathode Layer (112 µm, NCA)/Solid Electrolyte layer (30 µm)/Anode Layer (37 µm, Si alloy particles: CNT=9:1+binder): (Si alloy-CNT:Ag-C = 2:2 weight ratio) | 92.5 |
| Example 2: Elastic Sheet (25 µm)/Cathode Layer (112 µm, NCA)/Solid Electrolyte Layer (30 µm)/Anode Layer (37 µm, Lithiated Si alloy particles: CNT=9:1+binder): (Lithiated Si alloy-CNT:Ag-C = 2:2 weight ratio) | 93 |
| Reference Example 1: Elastic Sheet (100 µm)/Cathode Layer (112 µm, NCA)/Solid Electrolyte Layer (30 µm)/Anode Layer (17 µm, Ag-C + binder): (Si alloy-CNT:Ag-C = 0:4 weight ratio) | 90 |
| Example 4: Cathode Layer (113.8 µm, Li₂S-LiI-CNF)/Solid Electrolyte Layer (30 µm)/Anode Layer (37 µm, Si alloy particles:CNT=9:1+binder) : (Si alloy-CNT:Ag-C = 2:2 weight ratio) | 86 |
| Example 5: Cathode Layer (113.8 µm, Li₂S-LiI-CNF)/Solid Electrolyte Layer (30 µm)/Anode Layer (37 µm, lithized Si alloy particles:CNT=9:1+binder) : (lithized Si alloy-CNT:Ag-C = 2:2 weight ratio) | 87 |
| Reference Example 2: Elastic Sheet (50 µm)/Cathode Layer (113.8 µm, Li₂S-LiI-CNF)/Solid Electrolyte Layer (30 µm)/Anode Layer (17 µm, Ag-C+binder) : (Si alloy-CNT:Ag-C = 0:4 weight ratio) | 80 |

As shown in Table 2, the high-rate characteristics of the all-solid-state secondary batteries of Examples 1 and 2 were improved compared to the all-solid-state secondary battery of Reference Example 1.

Although not shown in Table 2, the high-rate characteristics of the all-solid-state secondary battery of Example 3 were also improved compared to the all-solid-state secondary battery of Reference Example 1.

It was judged that the all-solid-state secondary batteries of Examples 1 to 3 had improved high-rate characteristics compared to the all-solid-state secondary battery of Reference Example 1 by including the first anode active material having an alloy phase.

As shown in Table 2, the high-rate characteristics of the all-solid-state secondary batteries of Examples 4 and 5 were improved compared to the all-solid-state secondary battery of Reference Example 2.

It was judged that the all-solid-state secondary batteries of Examples 4 and 5 had improved high-rate characteristics compared to the all-solid-state secondary battery of Reference Example 2 by including the first anode active material having an alloy phase.

### [List of Reference Numerals for Major Elements]

1 All-solid-state secondary battery 10 cathode
11 Cathode current collector 12 Cathode active material layer
20 Anode 21 Anode current collector
22 First anode active material layer 23 Thin film
24 Second anode active material layer 30 Solid electrolyte layer
40, 40a, 40b First inactive member 50 Second inactive member

### Industrial Applicability

According to an aspect, it is possible to provide an all-solid-state secondary battery in which volume change during charging and discharging is suppressed and which has improved charging and discharging characteristics by the anode active material layer including the first anode active material having an alloy phase.

## Claims

1. An all-solid-state secondary battery comprising:
a cathode layer;
an anode layer; and
a solid electrolyte layer between the cathode layer and the anode layer, wherein the cathode layer comprises a cathode current collector and a cathode active material layer on one surface of the cathode current collector,
wherein the anode layer comprises an anode current collector and a first anode active material layer on one surface of the anode current collector,
wherein the first anode active material layer comprises a first anode active material, a second anode active material, and a carbon-based material, and
wherein the first anode active material comprises an alloy phase.

2. The all-solid-state secondary battery of claim 1, wherein the first anode active material comprises silicon (Si), iron (Fe), and a first metal, and
wherein the first metal comprises copper (Cu), aluminum (Al), titanium (Ti), chromium (Cr), manganese (Mn), cobalt (Co), nickel (Ni), zirconium (Zr), niobium (Nb), molybdenum (Mo), tin (Sn), cerium (Ce), or a combination thereof.

3. The all-solid-state secondary battery of claim 1, wherein the first anode active material comprises 60 at% to 90 at% of silicon (Si) based on 100 at% of the total first anode active material, and
comprises more than 0 at% and up to 30 at% of iron (Fe) based on 100 at% of the total first anode active material.

4. The all-solid-state secondary battery of claim 1, wherein the first anode active material comprises a silicon single phase, an alloy phase of silicon and iron, an alloy phase of silicon and a first metal, an alloy phase of iron and a first metal, an alloy phase of a plurality of first metals, or a combination thereof, and
wherein the alloy phase of silicon and iron comprises FeSi₂, Fe₂Si₅, FeSi, or a combination thereof.

5. The all-solid-state secondary battery of claim 1, wherein the first anode active material further comprises boron (B), carbon (C), phosphorus (P), or a combination thereof.

6. The all-solid-state secondary battery of claim 1, wherein the first anode active material is a lithiated anode active material.

7. The all-solid-state secondary battery of claim 1, wherein the first anode active material is in particle form, and a size of the first anode active material is 0.1 µm to 20 µm.

8. The all-solid-state secondary battery of claim 1, wherein the second anode active material is in particle form, and a size of the second anode active material is less than 1 µm, and
wherein the second anode active material comprises a carbon-based anode active material, a second metal-based anode active material distinguished from the first anode active material, or a combination thereof,
wherein the carbon-based anode active material comprises amorphous carbon, crystalline carbon, porous carbon, or a combination thereof, and wherein the second metal-based anode active material comprises gold (Au), platinum (Pt), palladium (Pd), silver (Ag), aluminum (Al), bismuth (Bi), tin (Sn), zinc (Zn), or a combination thereof.

9. The all-solid-state secondary battery of claim 1, wherein the second anode active material comprises a mixture of first particles consisting of amorphous carbon and second particles consisting of a second metal-based anode active material, and
wherein a content of the second particles is 1 wt% to 60 wt% based on the total weight of the mixture.

10. The all-solid-state secondary battery of claim 1, wherein the second anode active material comprises a composite anode active material,
wherein the composite anode active material comprises a carbon-based support and a third metal-based anode active material supported on the carbon-based support,
wherein the third metal-based anode active material comprises a metal, a metal oxide, a composite of a metal and a metal oxide, or a combination thereof,
wherein the third metal-based anode active material has a particle form, and a particle diameter of the third metal-based anode active material is 1 nm to 200 nm, and
wherein the carbon-based support has a particle form, and a particle diameter of the carbon-based support is 10 nm to 2 µm.

11. The all-solid-state secondary battery of claim 1, wherein the carbon-based material comprises a fibrous carbon-based material,
wherein an aspect ratio of the fibrous carbon-based material is 10 or more, and
wherein the fibrous carbon-based material comprises an amorphous fibrous carbon-based material, a crystalline fibrous carbon-based material, or a combination thereof.

12. The all-solid-state secondary battery of claim 1, wherein the carbon-based material comprises a fibrous carbon nanostructure, and
wherein the fibrous carbon nanostructure comprises carbon nanotubes, carbon nanofibers, carbon nanobelts, carbon nanorods, or a combination thereof.

13. The all-solid-state secondary battery of claim 1, wherein the first anode active material layer further comprises a binder,
wherein the binder comprises a polymer binder, and the binder comprises a fluorine-based binder.

14. The all-solid-state secondary battery of claim 1, wherein a ratio (B/A) of an initial charging capacity (B) of the first anode active material layer to an initial charging capacity (A) of the cathode active material layer is 0.01 to 0.75, and
wherein a thickness of the first anode active material layer is 1 µm to 50 µm.

15. The all-solid-state secondary battery of claim 1, further comprising a second anode active material layer,
wherein the second anode active material layer is disposed one or more of between the anode current collector and the first anode active material layer and between the anode current collector and the electrolyte layer, and
wherein the second anode active material layer is a metal layer, and the metal layer comprises lithium or a lithium alloy.

16. The all-solid-state secondary battery of claim 1, wherein the cathode active material layer comprises a cathode active material,
wherein the cathode active material comprises a sulfide-based cathode active material, an oxide-based cathode active material, or a combination thereof,
wherein the sulfide-based cathode active material comprises nickel sulfide, copper sulfide, Li₂S, a Li₂S-containing composite, or a combination thereof, and
wherein the oxide-based cathode active material comprises a lithium transition metal oxide, a metal oxide, or a combination thereof, wherein the lithium transition metal oxide comprises lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof, and the metal oxide comprises iron oxide, vanadium oxide, or a combination thereof.

17. The all-solid-state secondary battery of claim 1, wherein the cathode active material layer further comprises one or more selected from a solid electrolyte, a conductive material, and a binder, and
wherein the solid electrolyte comprises a sulfide-based solid electrolyte, and the conductive material comprises a carbon-based conductive material.

18. The all-solid-state secondary battery of claim 1, wherein the solid electrolyte layer comprises a solid electrolyte or a combination of a solid electrolyte and a gel electrolyte,
wherein the solid electrolyte comprises a sulfide-based solid electrolyte, an oxide-based solid electrolyte, a polymer solid electrolyte, or a combination thereof,
wherein the gel electrolyte comprises a polymer gel electrolyte,
wherein the sulfide-based solid electrolyte is one or more selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, or In), Li₇₋ₓPS₆₋ₓClₓ (0≤x≤2), Li₇₋ₓPS₆₋ₓBrₓ (0≤x≤2), and Li₇₋ₓPS₆₋ₓIₓ, (0≤x≤2),
wherein the sulfide-based solid electrolyte comprises an argyrodite-type solid electrolyte,
wherein the argyrodite-type solid electrolyte comprises one or more selected from Li₆PS₅Cl, Li₆PS₅Br, and Li₆PS₅I, and
wherein a density of the argyrodite-type solid electrolyte is 1.5 g/cc to 2.0 g/cc.

19. The all-solid-state secondary battery of claim 1, wherein one or more of the cathode current collector and the anode current collector comprises a base film and a metal layer disposed on one or both surfaces of the base film,
wherein the base film comprises a polymer, wherein the polymer comprises polyethylene terephthalate (PET), polyethylene (PE), polypropylene (PP), polybutylene terephthalate (PBT), polyimide (PI), or a combination thereof, and
wherein the metal layer comprises indium(In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

20. The all-solid-state secondary battery of claim 1, further comprising a first inactive member disposed on one or more of the other surface of the cathode current collector and the other surface of the anode current collector,
wherein the first inactive member is an elastic member.
